# EUROPEAN PATENT SPECIFICATION

(11) **EP 3 653 849 B1**
(45) Date of publication and mention of the grant of the patent: **20.09.2023**
(21) Application number: 18831453.8
(22) Date of filing: 13.07.2018
(51) Int. Cl.: F01D 25/10, F01D 19/00, F01D 25/34, F01K 13/02, F01K 7/22, F01K 11/02, F02C 6/00, F02C 7/277, F16D 43/04, F01K 23/10, F01K 23/14, F01K 7/16, F01K 7/20

(54) **WARMING METHOD FOR A STEAM TURBINE**
ERWÄRMUNGSVERFAHREN FÜR DAMPFTURBINE
PROCÉDÉ DE CHAUFFAGE DE TURBINE À VAPEUR

(30) Priority: 14.07.2017 CN 201710576071; 14.07.2017 CN 201720856249 U; 14.07.2017 CN 201720855486 U; 28.02.2018 CN 201810167959
(43) Date of publication of application: 20.05.2020
(73) Proprietor: Shanghai Electric Power Equipment Co., Ltd., Shanghai 201108 (CN); Shanghai Turbine Company Ltd., Shanghai 200240 (CN); Shanghai Electric Gas Turbine Co., Ltd., Shanghai 200240 (CN)
(72) Inventor: FENG, Lei, Shanghai 201108 (CN); ZHANG, Lijian, Shanghai 201108 (CN); YANG, Hong, Shanghai 201108 (CN); HE, Aping, Shanghai 201108 (CN); HU, Yu, Shanghai 201108 (CN)
(74) Representative: Kraus & Weisert Patentanwälte PartGmbB
(86) International application number: PCT/CN2018/095621
(87) International publication number: WO 2019/011326

(56) References cited:
- CN-A- 107 152 317
- CN-U- 203 430 579
- CN-U- 204 591 373
- CN-U- 205 876 402
- CN-U- 207 145 026
- CN-U- 207 278 308
- JP-A- S5 993 907
- US-A1- 2004 013 511
- US-A1- 2009 217 665
- US-A1- 2009 325 765
- US-A1- 2010 281 877
- US-A1- 2011 149 300
- US-A1- 2012 131 950
- US-A1- 2013 133 594
- US-A1- 2015 059 347
- US-A1- 2017 058 702

## Description

### Field of invention

The present invention relates to a gas-steam combined cycle system, and particularly to a combined cycle steam turbine quick start warming system and method, a combined cycle steam turbine quick start pre-warming system and a warming method thereof, and a steam turbine quick start warming system for a combined cycle unit.

### Prior arts

A steam turbine is one of very important equipment in a power plant, which is an energy conversion device to convert thermal energy to mechanical energy and in turn to convert to electric energy. That is, thermal energy and pressure potential of the high temperature, high pressure steam generated by a boiler, may be converted to mechanical energy of the steam turbine by the steam turbine, the rotor output draft of the steam turbine may be driven to apply work, the mechanical energy can be transmitted to a generator by the rotor output draft of the steam turbine, so that the mechanical energy may be converted to electric energy.

US 2009/325765 A1 discloses a method for engaging a drive shaft of a turbo engine with an output shaft by means of a clutch. The turbo engine is run up to a rotational speed that is subsynchronous to the speed of the output shaft and is maintained at the steady speed before a signal is set or before starting the engagement process.

US 2011/149300 A1 discloses a method of detecting an amount of an axis displacement in a power transmission device using an automatic self-aligning engagement clutch, the method being capable of accurately detecting the amount of the axis displacement in the automatic self-aligning engagement clutch during an operation with a simple configuration. In a power transmission device configured to transmit a driving force to a driven body by allowing a rotary shaft of a first drive source to engage with a rotary shaft of a second drive source through an automatic self-aligning engagement clutch, an amount of an axis position variation of each of the rotary shaft of the first drive source and the rotary shaft of the second drive source are measured by non-contact sensors, and an amount of a relative axis displacement of the rotary shaft of the second drive source relative to the rotary shaft of the first drive source is detected on the basis of the measurement result of the amount of the axis position variation of each rotary shaft when the rotary shaft of the first drive source engages with the rotary shaft of the second drive source through the automatic self-aligning engagement clutch.

JP S59 93907 A discloses to sharply shorten the starting time of a steam turbine, by installing an auxiliary evaporator, capable of obtaining high temperature gas through a heat exchange between high temperature gas and system feed water to be extracted out of a gas turbine, in a waste heat recovery heat exchanger. An air compressor, a gas turbine, a generator and a steam turbine are all coupled together through the same driving shaft. The high temperature gas extracted out of the gas turbine is fed to a waste heat recovery heat exchanger via a control valve. An auxiliary evaporator makes the high temperature gas and system feed water perform their heat exchange and secures high temperature steam. In time of hot starting, with the high temperature gas extracted out of the gas turbine, steam in a temperature corresponding to a casing metal temperature is produced and this steam is made to flow into the steam turbine. Doing like this, the plant starting time required can be sharply shortened.

US 2012/131950 A1 discloses an arrangement for liquefying natural gas. The arrangement includes a gas turbine unit that includes a gas turbine compressor, a steam turbine unit, a first compressor unit, a shiftable clutch, a heated steam generator for supplying steam to the steam turbine unit, and a second compressor unit. The steam turbine unit and the first compressor unit have a common, rigidly connected first shaft assembly, while the gas turbine unit and the second compressor unit have a common, rigidly connected second shaft assembly. In order to increase economic efficiency, the first shaft assembly and the second shaft assembly are operable to be connected to and disconnected from each other using the clutch. A suitable method for starting said arrangement is also provided.

US 2015/059347 A1 discloses a method for controlling coupling between a first machine including a first rotating shaft having an associated first positional phase angle defined by a first shaft indicia and a second machine including a second rotating shaft having an associated second positional phase angle defined by a second shaft indicia. A rotational speed and rotational angle of the first shaft are monitored, and rotation of the second shaft is controlled by bringing the second shaft to a predetermined rotational speed relative to the first shaft speed. Acceleration of the second shaft is controlled such that the second shaft indicia is within a predetermined angle relative to the first shaft indicia upon the second shaft being brought to the predetermined rotational speed, at which point the first and second shafts are coupled such that the second shaft indicia is within the predetermined angle relative to the first shaft indicia.

US 2009/217665 A1 discloses a method of operating a steam turbine in a combined-cycle power system. The method includes channeling a first amount of steam from a first steam generator to the steam turbine to facilitate powering the steam turbine, generating a second amount of steam within a second steam generator that is coupled in flow communication with the steam turbine, and calculating a predicted stress level within the steam turbine in the event the second amount of steam is channeled from the second steam generator into the steam turbine. An initiation time at which to channel the second amount of steam into the steam turbine is determined such that the calculated predicted stress level will not exceed a predetermined stress limit of the steam turbine. The second amount of steam is automatically channeled from the second steam generator to the steam turbine at the determined initiation time.

US 2013/133594 A1 discloses a method for controlling the operation of a steam generation system. Fluid flow is channeled from at least one first boiler within at least one conduit. Fluid flow is added within the conduit from at least one second boiler. At least one operating condition within the first and second boilers is detected. A fluid pressure set point and/or a fluid temperature set point for each boiler is determined based on the operating condition detected for each boiler. A fluid pressure and/or a fluid temperature is maintained within the first and second boiler to be approximately equal to the fluid pressure set point and the fluid temperature set point for each boiler, respectively, prior to fluid flow being channeled and/or during the channeling of fluid flow from the first boiler and/or the second boiler within the conduit to a steam process and/or at least one steam turbine engine.

A gas-steam combined cycle system means that a gas turbine acts as a front turbine, which injects steam generated by a waste heat boiler into the steam turbine, the waste heat boiler retrieve exhaust afterheat discharged by the gas turbine, the steam may expands in the steam turbine to apply work and to output electric energy. The gas-steam combined cycle may combine a gas turbine with higher average endothermic temperature and a steam turbine with lower average exothermic temperature, so that high temperature exhaust gas of the gas turbine may be introduced into the waste heat boiler to generate steam, and the steam may continue to apply work and generate power in the steam turbine, thus there has been a significant improvement about thermal energy utilization of the whole combined cycle system to compared with that of the single cycle system. Net efficiency of the combined cycle system is up to 48 % -62 %.

The gas turbine and the steam turbine of the gas-steam combined cycle system can be designed as a single-axis arrangement or multi-axis arrangement / sub-axis arrangement. The single-axis arrangement means that a gas turbine shafting and a steam turbine shafting are connected into a shafting to drive the same generator. The multi-axis arrangement / sub-axis arrangement means that the gas turbine and the steam turbine may drive individual generator, respectively. The single-axis combined cycle unit has the advantages of simplified system, compact layout, small workshop area and low civil construction cost, etc., so that the single-axis combined cycle unit has been rapidly popularized in recent years, particularly to in a new generation high-power combined cycle unit.

Recently, one of the single-axis combined cycle units most widely used in the market is equipped with a synchro-self-shifting clutch between the steam turbine and generator, the peak shaving performance of the combined cycle unit is excellent, and the gas turbine can operate separately. However, there is a phenomenon that the steam turbine is started up slowly during the cold start both in the single-axis combined cycle unit and the combined cycle unit with sub-axis arrangement. During the cold start, the gas turbine may be started up quickly, and the steam turbine may be started up slowly. Therefore, during the start, the gas turbine runs at low load at a long time and waits for the steam turbine to be warmed, resulting in low thermal efficiency; or the gas turbine increases the load quickly to participate in the peak-shaving operation, at this point, since the cold steam turbine is not yet warm, most of the steam produced by the waste heat boiler is not allowed to enter the steam turbine to apply work, but is discharged directly through the bypass to the condenser, which inevitably produces a large energy loss and increases the cost of power generation.

### Content of the present invention

The technical problem to be resolved by the present invention is to provide a combined cycle steam turbine quick start warming system and method, a combined cycle steam turbine quick start pre-warm system and warm method thereof, which can decrease warm time consuming of a combined cycle steam turbine and can decrease cold start time, and to provide a combined cycle unit steam turbine quick start warming system and method which can decrease warm time consuming of a combined cycle unit steam turbine and can decrease cold start time, to overcome the above deficiencies in prior art.

Thus, in accordance with the present invention, in order to solve the technical problem as mentioned above, there is provided a method according to the independent claim. The dependent claim describes an embodiment.

It is disclosed:
A combined cycle steam turbine quick start warming system comprises a warming steam source, and a gas turbine, a generator, a synchro-self-shifting clutch and a steam turbine in coaxial arrangement and sequential connection, wherein the steam turbine comprises a high pressure cylinder, an intermediate pressure cylinder and a low pressure cylinder; and the warming steam source is connected with a warming steam conveying pipeline which is in communication with the high pressure cylinder and the intermediate pressure cylinder.

Preferably, the high pressure cylinder has a steam inlet which is in communication with a high pressure steam pipeline, wherein the high pressure steam pipeline is provided with an electric isolation valve and a high pressure steam-in valve group from upstream to downstream in sequence; and the warming steam conveying pipeline is in communication with the high pressure steam pipeline by a high pressure convey pipe between the electric isolation valve and the high pressure steam-in valve group.

Preferably, the high pressure convey pipe is provided with two high pressure cut-off valves in series.

Preferably, the high pressure cylinder has a steam outlet which is in communication with a high exhaust steam pipe, wherein the high exhaust steam pipe is provided with a high exhaust one-way valve, and the warming steam conveying pipeline is in communication with the high exhaust steam pipe by the high pressure convey pipe between the high exhaust one-way valve and the steam outlet of the high pressure cylinder.

Preferably, a reheater is further comprised, wherein a steam outlet of the high pressure cylinder is in communication with an inlet of the reheater by the high exhaust steam pipe, an outlet of the reheater is in communication with the steam inlet of the intermediate pressure cylinder by an intermediate pressure steam-in pipe, wherein the intermediate pressure steam-in pipe is provided with an intermediate pressure steam-in valve group.

Preferably, the intermediate pressure steam-in pipe is further provided with a gate valve upstream of the intermediate pressure steam-in valve group, wherein the warming steam conveying pipeline is in communication with the intermediate pressure steam-in pipe by an intermediate pressure convey pipe between the gate valve and the intermediate pressure steam-in valve group.

Preferably, the intermediate pressure steam-in valve group comprises an intermediate pressure main steam valve and an intermediate pressure regulating valve; and a quick cold interface is provided between the intermediate pressure main steam valve and the intermediate pressure regulating valve; and the warming steam conveying pipeline is in communication with the intermediate pressure steam-in pipe by the intermediate pressure convey pipe at the quick cold interface.

Preferably, the intermediate pressure convey pipe is provided with two intermediate pressure cut-off valves in series.

Preferably, the intermediate pressure convey pipe is further provided with a first regulating valve upstream of the two intermediate pressure cut-off valves.

Preferably, the generator is connected with an inverter starting device.

A combined-cycle steam turbine quick start warming method comprises steps: step S 1, operating a gas turbine and a steam turbine in a turned state; step S2, increasing a rotational speed of the gas turbine to and keeping at m rpm; step S3, introducing warming steam into the steam turbine, increasing the rotational speed of the steam turbine to and keeping at n rpm, where n<m; step S4, decreasing the rotational speed of the gas turbine, thus a synchro-self-shifting clutch is automatically meshed when the rotational speed of the gas turbine is decreased to n rpm and the rotational speed of the steam turbine tends to exceed the rotational speed of the gas turbine; step S5, utilizing the steam turbine to drive the gas turbine and the generator to rotate, so as to start warming up, and using the steam turbine to drive the gas turbine and the generator to keep their rotational speed at p rpm, where p<n; step S6, stopping the introducing warming steam and finishing the warming up when the temperature of an intermediate pressure rotor of the steam turbine reaches a preset temperature, or the warming time reaches a preset time, and then restoring the gas turbine and the steam turbine to the turned state.

Preferably, in the step S2, m satisfies: 700 ≤ m ≤ 1200.

Preferably, in the step S2, increasing the rotational speed of the gas turbine to and keeping at m rpm by an inverter starting device and a generator.

Preferably, in the step S3, n satisfies: 500 ≤ n ≤ 1000.

Preferably, in the step S3, the warming steam is high exhaust steam from an adjacent unit or low pressure supplement steam from an adjacent unit or heat supply steam from an adjacent unit or start boiler steam.

Preferably, when the steam from an adjacent unit is used as the warming steam, condensation water generated in a condenser of the steam turbine unit is returned to a hot well of the adjacent unit.

Preferably, in the step S5, after starting warming up, increase pressure of the condenser in the steam turbine unit.

Preferably, in the step S5, control pressure of the condenser at 10KPa-30KPa.

Preferably, in the step S5, p satisfies: 300 ≤ p ≤ 1000.

Preferably, in the step S6, the preset temperature is not less than 150°C.

A combined cycle steam turbine quick start pre-warm system comprises a warming steam source, and a gas turbine, a generator, a synchro-self-shifting clutch and a steam turbine in coaxial arrangement and sequential connection, wherein the steam turbine comprises a high pressure cylinder, an intermediate pressure cylinder and a low pressure cylinder; and the warming steam source is connected with a warming steam conveying pipeline which is in communication with the high pressure cylinder and the intermediate pressure cylinder; the synchro-self-shifting clutch is a clutch provided with a primary pawl and a secondary pawl.

Preferably, the high pressure cylinder comprises a steam inlet which is in communication with a high pressure steam pipeline, wherein the high pressure steam pipeline is provided with an electric isolation valve and a high pressure steam-in valve group in sequence from upstream to downstream, wherein the warming steam conveying pipeline is in communication with the high pressure steam pipeline by the high pressure convey pipe between the electric isolation valve and the high pressure steam-in valve group.

Preferably, the high pressure convey pipe is provided with two high pressure cut-off valves in series.

Preferably, a reheater is further comprised, wherein the high pressure cylinder comprises a steam outlet which is in communication with an inlet of the reheater by a high exhaust steam pipe, wherein the reheater comprises an outlet which is in communication with an inlet of the intermediate pressure cylinder by an intermediate pressure steam-in pipe, wherein the intermediate pressure steam-in pipe is provided with an intermediate pressure steam-in valve group.

Preferably, the intermediate pressure steam-in pipe is further provided with a gate valve upstream of the intermediate pressure steam-in valve group, wherein the warming steam conveying pipeline is in communication with the intermediate pressure steam-in pipe by an intermediate pressure convey pipe between the gate valve and the intermediate pressure steam-in valve group.

Preferably, the intermediate pressure steam-in valve comprises an intermediate pressure main steam valve and an intermediate pressure regulating valve, wherein a quick cold interface is provided between the intermediate pressure main steam valve and the intermediate pressure regulating valve, wherein the warming steam conveying pipeline is in communication with the intermediate pressure steam-in pipe by an intermediate pressure convey pipe at the quick cold interface.

Preferably, the intermediate pressure convey pipe is provided with two intermediate pressure cut-off valves in series.

Preferably, the intermediate pressure convey pipe is further provided with a regulating valve upstream of the two intermediate pressure cut-off valves.

Preferably, the gas turbine and the steam turbine share one turned device, and the turned device is connected with the steam turbine.

Preferably, the primary pawl and the secondary pawl of the synchro-self-shifting clutches are each set to four.

Preferably, the synchro-self-shifting clutch comprises an input end, an output end, a main sliding part and a secondary sliding part, wherein the input end is connected with a rotor shaft of the steam turbine, wherein the output end is connected with a rotor shaft of the generator, wherein the input end and the main sliding part are coupled by a main spiral spline, wherein the main sliding part and the secondary sliding part are coupled by a secondary spiral spline, wherein the primary pawl is provided on the output end, wherein the secondary sliding part is provided with a primary rachet to be coupled with the primary pawl, wherein the secondary pawl is provided on the secondary sliding part, wherein the output end is provided with a secondary rachet to be coupled with the secondary pawl.

A warming method for the combined cycle steam turbine quick start pre-warm system as mentioned above comprises steps: step one, having the gas turbine at stationary state or a state having a rotational speed less than that of the steam turbine; step two, increasing the rotational speed of the steam turbine, thus the synchro-self-shifting clutch provided with two pawls is automatically meshed when the rotational speed of the steam turbine tends to exceed the rotational speed of the gas turbine; step three, introducing warming steam into the steam turbine and increasing the rotational speed of the steam turbine to and keeping at n rpm, and utilizing the steam turbine to drive the gas turbine and the generator to rotate together at a rotational speed of p rpm; step four, starting warming up; step five, stopping introducing warming steam and finishing the warming up when the temperature of an intermediate pressure rotor of the steam turbine reaches a preset temperature, or the warming time reaches a preset time, and then restoring the gas turbine and the steam turbine to the turned state.

Preferably, in the step two, after increasing the rotational speed of the steam turbine by the turned device and the meshing of the synchro-self-shifting clutch with the two pawls, the steam turbine, the generator and the gas turbine are rotated together by driving the turned device, and in the step four, dropping out the turned device before starting warming up.

Preferably, in the step three, p satisfies: 500 ≤ p ≤ 2000.

Preferably, in the step four, after the starting warming up, increase pressure of a condenser in the steam turbine unit.

Preferably, in the step four, controlling pressure of the condenser at 10KPa-30KPa.

Preferably, in the step five, the preset temperature is not less than 150°C.

A steam turbine quick start warming system for a combined-cycle unit comprises a gas turbine, a steam turbine, a generator and a warming steam source, wherein the generator is connected with output draft of the steam turbine; and the steam turbine comprises a high pressure cylinder, an intermediate pressure cylinder and a low pressure cylinder; and the warming steam source is connected with a warming steam conveying pipeline which is in communication with the high pressure cylinder and the intermediate pressure cylinder.

Preferably, a steam inlet of the high pressure cylinder is in communication with a high pressure steam pipeline, wherein the high pressure steam pipeline is provided with an electric isolation valve and a high pressure steam-in valve group in sequence from upstream to downstream, the warming steam conveying pipeline is in communication with the high pressure steam pipeline by a high pressure convey pipe between the electric isolation valve and the high pressure steam-in valve group. Preferably, the high pressure convey pipe is provided with two high pressure cut-off valves in series.

Preferably, an steam outlet of the high pressure cylinder is in communication with a high exhaust steam pipe; and the high exhaust steam pipe is provided with a high exhaust one-way valve; and the warming steam conveying pipeline is in communication with the high exhaust steam pipe by a high pressure convey pipe between the high exhaust one-way valve and the steam outlet of the high pressure cylinder.

Preferably, a reheater is further comprised, wherein the steam outlet of the high pressure cylinder is in communication with an inlet of the reheater by the high exhaust steam pipe; and an outlet of the reheater is in communication with the steam inlet of the intermediate pressure cylinder by an intermediate pressure steam-in pipe, wherein the intermediate pressure steam-in pipe is provided with an intermediate pressure steam-in valve group.

Preferably, the intermediate pressure steam-in pipe is further provided a gate valve upstream of the intermediate pressure steam-in valve group; and the warming steam conveying pipeline is in communication with the intermediate pressure steam-in pipe by an intermediate pressure convey pipe between the gate valve and the intermediate pressure steam-in valve group.

Preferably, the intermediate pressure steam-in valve group comprises an intermediate pressure main steam valve and an intermediate pressure regulating valve; and a quick cold interface is provided between the intermediate pressure main steam valve and the intermediate pressure regulating valve, the warming steam conveying pipeline is in communication with the intermediate pressure steam-in pipe by an intermediate pressure convey pipe at the quick cold interface.

Preferably, the intermediate pressure convey pipe is provided with two intermediate pressure cut-off valves in series.

Preferably, the intermediate pressure convey pipe is further provided with a first regulating valve upstream of the two intermediate pressure cut-off valves.

Preferably, the gas turbine and the steam turbine are in a single-axis or sub-axis arrangement.

The invention has the following beneficial effects compared with prior arts:
The combined cycle steam turbine quick start warming system according to the present invention may prewarm the steam turbine by using the warming steam supplied by the warming steam source at first before starting up the gas turbine, to increase the initial temperature of the steam turbine, which can make the steam turbine run with load earlier, while increases peak shaving capacity and power generation, can greatly shorten the time required for the combined cycle unit cold start, can save energy and start-up cost, and can improve the flexibility of unit cold start-up.

The combined cycle steam turbine quick start warming system according to the present invention may prewarm the steam turbine by using the warming steam supplied by the warming steam source at first before starting up the gas turbine, to increase the initial temperature of the steam turbine, which can make steam turbine run with load earlier, while increases peak capacity and power generation, can greatly shorten the time required for the combined cycle unit cold start, can save energy and start-up cost, and can improve the flexibility of unit cold start-up. Further, before synchronizing the gas turbine and the steam turbine, firstly, the rotational speed m rpm of the gas turbine is increased to more than the synchronize target rotational speed n rpm, and then the rotational speed of the steam turbine is increased to the synchronize target rotational speed n rpm, then the rotational speed of the gas turbine is decreased, so that the synchro-self-shifting clutch will be meshed automatically when the rotational speed of the gas turbine is decreased to n rpm and the rotational speed of the steam turbine has a trend to exceed the rotational speed of the gas turbine in order to synchronize the gas turbine and the steam turbine, by means of this speed-down meshing synchronization, the risk of the synchro-self-shifting clutch damage caused by high-speed turning brake can be effectively eliminated.

The combined cycle steam turbine quick start warming system and warming method thereof according to the present invention may prewarm the steam turbine by using the warming steam supplied by the warming steam source at first before starting up the gas turbine, to increase the initial temperature of the steam turbine, which can make steam turbine run with load earlier, while increases peak capacity and power generation, can greatly shorten the time required for the combined cycle unit cold start, can save energy and start-up cost, and can improve the flexibility of unit cold start-up. Further, the synchro-self-shifting clutch according to the present invention is provided with a primary pawl and a secondary pawl of the clutch, in the state of stationary or slow speed of the combined cycle unit, the synchro-self-shifting clutch will should be mashed as long as the rotational speed of the steam turbine with a trend to exceed the rotational speed of the gas turbine, so that the gas turbine and the steam turbine are synchronized in the low speed, and thus the risk of the synchro-self-shifting clutch damage caused by high-speed turning brake can be effectively eliminated.

The combined cycle unit steam turbine quick start warming system according to the present invention may prewarm the steam turbine by using the warming steam supplied by the warming steam source at first before starting up the gas turbine, to increase the initial temperature of the steam turbine, which can make steam turbine run with load earlier, while increases peak capacity and power generation, can greatly shorten the time required for the combined cycle unit cold start, can save energy and start-up cost, and can improve the flexibility of unit cold start-up.

### Brief description of the drawings

Fig. 1 is a structural representation of a combined cycle steam turbine quick start warming system according to a second embodiment of the present invention.
Fig. 2 is a structural representation of a combined cycle steam turbine quick start warming system according to a third embodiment of the present invention.
Fig. 3 is a structural representation of a combined cycle steam turbine quick start warming system according to a fourth embodiment of the present invention.
Fig. 4 is a structural representation of a combined cycle steam turbine quick start warming system according to a fifth embodiment of the present invention.
Fig. 5 is a structural representation of a combined cycle steam turbine quick start warming system according to a sixth embodiment of the present invention.
Fig. 6 is a structural representation of a clutch with double pawls used in the combined cycle steam turbine quick start pre-warm system according to the present invention.
Fig. 7 is a structural representation of a combined cycle steam turbine quick start warming system according to a seventh embodiment of the present invention.
Fig. 8 is a structural representation of a combined cycle steam turbine quick start warming system according to an eighth embodiment of the present invention.
Fig. 9 is a structural representation of a combined cycle steam turbine quick start warming system according to a ninth embodiment of the present invention.

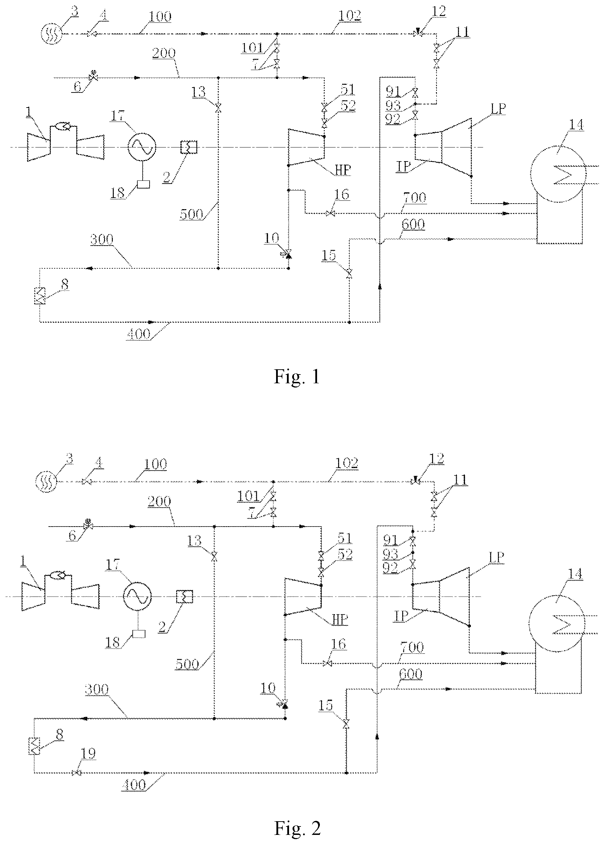

### Symbol marking explain of Figs. 1 -3:

100, warming steam conveying pipeline
101, high pressure convey pipe
102, intermediate pressure convey pipe
200, high pressure steam pipeline
300, high exhaust steam pipe
400, intermediate pressure steam-in pipe
500, high pressure bypass
600, intermediate pressure bypass
700, air canal
800, hydrophobic pipeline
HP, high pressure cylinder
IP, intermediate pressure cylinder
LP, low pressure cylinder
1, gas turbine
2, synchro-self-shifting clutch
3, warming steam source
4, delivery valve
51, high pressure main steam valve
52, high pressure regulating valve
6, electric isolation valve
7, high pressure cut-off valve
8, reheater
91, intermediate pressure main steam valve
92, intermediate pressure regulating valve
93, quick cold interface
10, high exhaust one-way valve
11, intermediate pressure cut-off valve
12, first regulating valve
13, high pressure bypass valve
14, condenser
15, intermediate pressure bypass valve
16, vent valve
17, generator
18, inverter starting device
19, gate valve
20, second regulating valve
21, trap valve

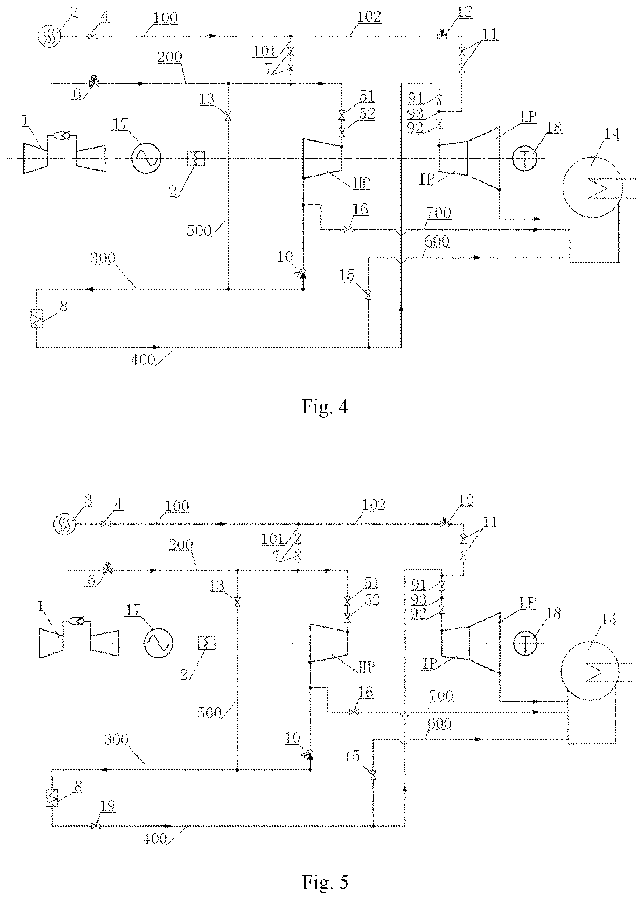

**Symbol marking explain of** **Figs. 4 -6****:**
100, warming steam conveying pipeline
101, high pressure convey pipe
102, intermediate pressure convey pipe
200, high pressure steam pipeline
300, high exhaust steam pipe
400, intermediate pressure steam-in pipe
500, high pressure bypass
600, intermediate pressure bypass
700, air canal
HP, high pressure cylinder
IP, intermediate pressure cylinder
LP, low pressure cylinder
1, gas turbine
2, synchro-self-shifting clutch
3, warming steam source
4, delivery valve
51, high pressure main steam valve
52, high pressure regulating valve
6, electric isolation valve
7, high pressure cut-off valve
8, reheater
91, intermediate pressure main steam valve
92, intermediate pressure regulating valve
93, quick cold interface
10, high exhaust one-way valve
11, intermediate pressure cut-off valve
12, regulating valve
13, high pressure bypass valve
14, condenser
15, intermediate pressure bypass valve
16, vent valve
17, generator
18, turned device
19, gate valve
21, primary pawl
22, secondary pawl
23, output end
231, relay driven tooth
232, driven tooth
24, input end
25, secondary sliding part
251, relay driving tooth
26, main sliding part
261, driving tooth
27, secondary spiral spline
28, main spiral spline

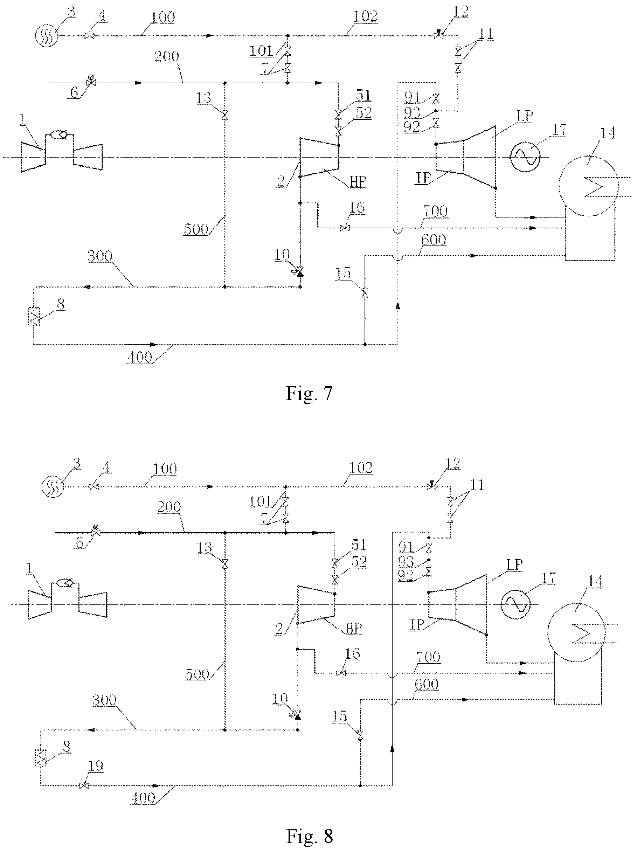

### Symbol marking explain of Figs. 7 -9:

100, warming steam conveying pipeline
101, high pressure convey pipe
102, intermediate pressure convey pipe
200, high pressure steam pipeline
300, high exhaust steam pipe
400, intermediate pressure steam-in pipe
500, high pressure bypass
600, intermediate pressure bypass
700, air canal
800, hydrophobic pipeline
HP, high pressure cylinder
IP, intermediate pressure cylinder
LP, low pressure cylinder
1, gas turbine
2, steam turbine
3, warming steam source
4, delivery valve
51, high pressure main steam valve
52, high pressure regulating valve
6, electric isolation valve
7, high pressure cut-off valve
8, reheater
91, intermediate pressure main steam valve
92, intermediate pressure regulating valve
93, quick cold interface
10, high exhaust one-way valve
11, intermediate pressure cut-off valve
12, first regulating valve
13, high pressure bypass valve
14, condenser
15, intermediate pressure bypass valve
16, vent valve
17, generator
19, gate valve
20, second regulating valve
21, trap valve

### Detailed description of the preferred embodiment

Hereinafter, embodiments of the present invention will be explained more fully where the second to ninth embodiments are explained with reference to the drawings. The embodiments used herein are intended merely to explain the present invention, and should not construe as limiting the scope of the present invention.

In description of the present invention, it is to be explained that, the terms "center", "longitudinal direction", "transverse direction", "up", "low", "front", "back", "left", "right", "vertical", "horizontal", "top", "bottom", "inside", "outside", and the like is used to indicate the direction or position relation based on the position or position relation shown in the drawing, which are only to facilitate the description of the presentation and simplified description, and are not to indicate or imply that the device or element referred to must have a specific orientation, constructed and operated in a specific orientation, and therefore cannot be understood as a restriction on the present invention. Further, the term "first", "second" is used only for descriptive purposes and cannot be understood as an indication or implication of relative importance.

In description of the present invention, it is to be explained that, unless otherwise specified and defined, the term "installation", "connection" shall be broadly understood, for example, as a fixed connection, or as a detachable connection, or as an integral connection; as a mechanical connection, or as an electrical connection; as a direct connection, or as an indirect connection through an intermediate medium, or as an internal connection between the two elements. The specific meaning of the above term in the invention can be understood according to the specific circumstances to those of ordinary skilled in the arts.

Furthermore, in description of the present invention, unless otherwise stated, "multiple" means two or more than two.

### First embodiment

A combined-cycle steam turbine quick start warming method is provided according to the first embodiment of the present invention. The combined-cycle steam turbine quick start warming method according to the first embodiment may be suitable to a cold start-up for a single-axis combined cycle unit of a synchro-self-shifting clutch. The single-axis combined cycle unit is provided with a generator between a gas turbine and a steam turbine, a draft of the generator is connected with a rotor draft of the gas turbine at an end thereof, the draft of the generator is connected with a rotor draft of the steam turbine by the synchro-self-shifting clutch at another end thereof, and the generator is connected with an inverter starting device. Specifically, the combined-cycle steam turbine quick start warming method according to the first embodiment comprises steps:
Step S1, the gas turbine and the steam turbine are operated in a turned state. That is, before cold starting up the unit, the gas turbine and the steam turbine are operated individual in a turned rotational speed driven by the turned device, the unit is supplied with steam by a gland seal system to establish vacuum. Preferably, the gas turbine can be kept to a turned rotational speed of 120 rpm driven by its turned device, and the steam turbine can be kept to the rotational speed of 60 rpm driven by its turned device.
Step S2, the rotational speed of the gas turbine is increased to m rpm, and the rotational speed of the gas turbine can be kept stably at m rpm. Preferably, the rotational speed of the gas turbine may be increased to and may be kept in m rpm by an inverter starting device and the generator. In the first embodiment, m satisfies: 700 ≤ m ≤ 1200. Preferably, m= 1000.
Step S3, a warming steam is introduced to the steam turbine, the rotational speed of the steam turbine is increased to n rpm, where n < m, and the rotational speed of the steam turbine is kept stably at n rpm. In the first embodiment, n satisfies: 500 ≤ n ≤ 1000. Preferably, n=800. The warming steam in the first embodiment may be high exhaust steam from an adjacent unit, may also be low pressure supplement steam from an adjacent unit, may also be heat supply steam from an adjacent unit, and may also be start boiler steam. When the steam from an adjacent unit is used as the warming steam, condensation water in a condenser of the steam turbine is returned back in a hot well of the adjacent unit. Before the cold star-up of the steam turbine is started, a high pressure cylinder and an intermediate pressure cylinder thereof is needed to be warmed, therefore, the warming steam may be divided into two branches, one is in communication with the high pressure cylinder, and the other one is in communication with the intermediate pressure cylinder. The warming steam in communication with the high pressure cylinder may be introduced from a steam inlet of the high pressure cylinder in a positive direction way, or may also be introduced from a steam outlet of the high pressure cylinder in a negative direction way. The warming steam in communication with the intermediate pressure cylinder may be introduced from a steam inlet of the intermediate pressure cylinder in a positive direction way.
Step S4, the rotational speed of the gas turbine is decreased. The synchro-self-shifting clutch will be meshed automatically when the rotational speed of the gas turbine is decreased to n rpm, and the rotational speed of the steam turbine has a trend to exceed the rotational speed of the gas turbine. That is, the synchro-self-shifting clutch will be meshed automatically when the rotational speed of the gas turbine is decreased to be equal to the rotational speed of the steam turbine. And with the downward trend being kept, the rotational speed of the steam turbine has a trend to exceed the rotational speed of the gas turbine, and there is a speed difference between the rotational speed of the steam turbine and the rotational speed of the gas turbine. In the first embodiment, the synchronize target speed of the gas turbine and the steam turbine is set, that is, the rotational speed of the automatic meshing for the synchro-self-shifting clutch is set to n rpm. Before the gas turbine and the steam turbine is synchronized, firstly the rotational speed of the gas turbine is increased to m rpm to exceed the synchronize target speed which is n rpm, then the rotational speed of the steam turbine is increased to the synchronize target speed which is n rpm, then the rotational speed of the gas turbine is decreased, the synchro-self-shifting clutch will be automatically meshed when the rotational speed of the gas turbine decreased to n rpm, and the rotational speed of the steam turbine has a trend to exceed the rotational speed of the gas turbine in order to synchronize the gas turbine and the steam turbine, by means of this speed-down meshing synchronization, the risk of the synchro-self-shifting clutch damage caused by high-speed turning brake can be effectively eliminated.
Step S5, the gas turbine is driven by the steam turbine to start the warming up. In the first embodiment, the inverter starting device may be dropped out of operation, the gas turbine and the generator are driven by the steam turbine to start the warming up. At this point, the steam turbine drives the gas turbine to keep a rotational speed at p rpm, where p < n. That is, in the warming up, the rotational speed p rpm of the gas turbine driven by the steam turbine is decreased to and kept to less than the rotational speed which is n rpm. In the first embodiment, p satisfies: 300 ≤ p ≤ 1000. Preferably, p = 500, or p = 800. Since the steam turbine is run with load, the warming effect can be enhanced by increasing steam introduce. Preferably, after starting the warming up, to enhance the warming efficiency, the pressure of the condenser in the steam turbine unit can be increased, that is, the backpressure of the steam turbine can be increased, the higher the backpressure, the bigger the steam introduce of the steam turbine at the same rotational speed and the shorter the warming time. Preferably, the pressure of the condenser is controlled at 10 KPa - 30 KPa.
Step S6, the introducing warming steam is stopped, the warming up is finished when the temperature of an intermediate pressure rotor of the steam turbine reaches a preset temperature, or the warming time reaches a preset time, and the gas turbine and the steam turbine are returned to the turned state, the rotational speeds of the gas turbine and the steam turbine is decreased individual to the initial turning rotational speed, the synchro-self-shifting clutch is meshed automatically when the rotational speed of the steam turbine is less than the rotational speed of the gas turbine. The preset temperature shall not be less than 150°C when determining the end of the warming up based on whether the temperature of the steam turbine intermediate pressure rotor reaches the preset temperature, preferably, the preset temperature can be determined according to the actual working conditions in the field, for example, the warming steam can be cut off when the temperature of the steam turbine intermediate pressure rotor rises to 150°C or 200°C or 300°C, to end the warming up. Of course, it is also possible to determine whether to end the warming up based on whether the actual warming time is up to the preset time, and the preset time is selected according to the actual working conditions in the field.

After the warming up is over, each of the rotational speeds of the gas turbine and the steam turbine is returned to the turning rotational speed, the combined cycle unit can be started normally in a conventional warm or hot state.

The combined-cycle steam turbine quick start warming method according to the first embodiment may prewarm the steam turbine by using the warming steam at first before starting up the gas turbine, to increase the initial temperature of the steam turbine, which can make the steam turbine run with load earlier, while increases peak shaving capacity and power generation, can greatly shorten the time required for the combined cycle unit cold start, can save energy and start-up cost, and can improve the flexibility of unit cold start-up.

### Second embodiment

As shown in Fig. 1, an embodiment of a combined cycle steam turbine quick start warming system is provided according to the second embodiment of the present invention. The combined cycle steam turbine quick start warming system according to the second embodiment can be used to implement the combined-cycle steam turbine quick start warming method according to the first embodiment.

Specifically, the combined cycle steam turbine quick start warming system according to the second embodiment comprises a warming steam source 3, and a gas turbine 1, a generator 17, a synchro-self-shifting clutch 2 and a steam turbine in coaxial arrangement and sequential connection. That is, a shaft of the generator 17 is connected with a rotor shaft of the gas turbine 1 at one end thereof, and the shaft of the generator 17 is connected with a rotor shaft of the steam turbine at the other end by the synchro-self-shifting clutch 2 thereof. The generator 17 is connected with an inverter starting device 18. The inverter starting device 18 can start-up the generator 17, and the generator 17 can reach a rotational speed to be required, by starting up the generator 17 by the inverter starting device 18. The gas turbine 1 can be driven by the generator 17 to run together. The steam turbine comprises a high pressure cylinder HP, an intermediate pressure cylinder IP and a low pressure cylinder LP. The steam turbine can adopt a structure of the high pressure cylinder HP as a separate cylinder and the intermediate pressure cylinder IP and the low pressure cylinder LP as a combined cylinder, and can also use a structure of the high pressure cylinder HP and the intermediate pressure cylinder IP as a combined cylinder and the low pressure cylinder LP as a separate cylinder. The warming steam source 3 is connected with a warming steam conveying pipeline 100 which is in communication with the high pressure cylinder HP and the intermediate pressure cylinder IP, to introduce warming steam into the high pressure cylinder HP and the intermediate pressure cylinder IP. The warming steam conveying pipeline 100 is provided with a delivery valve 4, for controlling the ON and OFF of the warming steam conveying pipeline 100. The warming steam supplied by the warming steam source 3 may be the high exhaust steam from an adjacent unit, the low pressure supplement steam from an adjacent unit, the heat supply steam from an adjacent unit, or the steam of an auxiliary boiler.

The combined cycle steam turbine quick start warming system according to the second embodiment may prewarm the steam turbine by using the warming steam supplied by the warming steam source 3 at first before starting up the gas turbine 1, to increase the initial temperature of the steam turbine, which can make steam turbine run with load earlier, while increases peak shaving capacity and power generation, can greatly shorten the time required for the combined cycle unit cold start, can save energy and start-up cost, and can improve the flexibility of unit cold start-up.

Further, a steam inlet of the high pressure cylinder HP is in communication with the high pressure steam pipeline 200, and the high pressure steam pipeline 200 is used to introduce a high pressure main steam into the high pressure cylinder HP. The high pressure steam pipeline 200 is provided with an electric isolation valve 6 and a high pressure steam-in valve group in sequence from upstream to downstream. The high pressure steam-in valve group is adjacent to the steam inlet of the high pressure cylinder HP, for using to regulate the flow of high pressure main steam into the high pressure cylinder HP. Preferably, the high pressure steam-in valve group comprises a high pressure main steam valve 51 and a high pressure regulating valve 52, and the high pressure main steam valve 51 and the regulating valve 52 are in series. The electric isolation valve 6 is near to a side of boiler for providing the high pressure main steam, for controlling the ON and OFF of the high pressure steam pipeline 200. In the second embodiment, the warming steam conveying pipeline 100 is in communication with the high pressure steam pipeline 200 by a high pressure convey pipe 101 between the electric isolation valve 6 and the high pressure steam-in valve group. When the electric isolation valve 6 is closed and the high pressure steam-in valve group is open, the warming steam in the warming steam conveying pipeline 100 may be introduced into the high pressure steam pipeline 200 via the high pressure convey pipe 101, and may be introduced into the high pressure cylinder HP from the steam inlet of the high pressure cylinder HP via the high pressure steam-in valve group in a positive steam-in way, and the closed electric isolation valve 6 may prevent the warming steam in the high pressure steam pipeline 200 from flowing to the boiler side. Of course, in the present invention, the warming steam in communication with the high pressure cylinder HP may also be introduced from the steam outlet of the high pressure cylinder HP in a negative steam-in way.

Preferably, the high pressure convey pipe 101 is provided with a high pressure cut-off valve 7, for controlling the ON and OFF of the high pressure convey pipe 101. Since the high pressure cut-off valve 7 may contact the high pressure steam directly, for safety reason, preferably, the high pressure convey pipe 101 is provided with two high pressure cut-off valves 7 in series.

The combined cycle steam turbine quick start warming system according to the second embodiment further comprises a reheater 8, wherein the steam outlet of the high pressure cylinder HP is in communication with an inlet of the reheater 8 by a high exhaust steam pipe 300. An outlet of the reheater 8 is in communication with a steam inlet of the intermediate pressure cylinder IP by an intermediate pressure steam-in pipe 400. The high exhaust steam discharged from the steam outlet of the high pressure cylinder HP is introduced into the reheater 8 by the high exhaust steam pipe 300 to be reheated, thus a heat reheated steam produced in the reheater 8 is introduced into the intermediate pressure cylinder IP by the intermediate pressure steam-in pipe 400. The high exhaust steam pipe 300 is provided with a high exhaust one-way valve 10, for preventing the high exhaust steam from back flowing into the high pressure cylinder HP.

The intermediate pressure steam-in pipe 400 is provided with an intermediate pressure steam-in valve group, the intermediate pressure steam-in valve group is near the steam inlet of the intermediate pressure cylinder IP, for regulating the flow of the heat reheated steam introduced into the intermediate pressure cylinder IP. Preferably, the intermediate pressure steam-in valve group comprises an intermediate pressure main steam valve 91 and an intermediate pressure regulating valve 92, the intermediate pressure main steam valve 91 and the intermediate pressure regulating valve 92 are in series, wherein a quick cold interface 93 is provided on an intermediate pressure steam-in valve casing between the intermediate pressure main steam valve 91 and the valve 92.

In the second embodiment, the warming steam conveying pipeline 100 is in communication with the intermediate pressure steam-in pipe 400 by an intermediate pressure convey pipe 102 at the quick cold interface 93. When the intermediate pressure main steam valve 91 is closed and the intermediate pressure regulating valve 92 is opened, the warming steam in the warming steam conveying pipeline 100 may be introduced into the quick cold interface 93 via the intermediate pressure convey pipe 102, and may be introduced from the steam inlet of the intermediate pressure cylinder IP via the intermediate pressure regulating valve 92 in a positive steam-in way. The closed intermediate pressure main steam valve 91 may prevent the warming steam from flowing into the reheater 8 side via the intermediate pressure main steam valve 91.

Preferably, the intermediate pressure convey pipe 102 is provided with an intermediate pressure cut-off valve 11, for controlling the ON and OFF of the intermediate pressure convey pipe 102. Since the intermediate pressure cut-off valve 11 may contact a high temperature steam directly, for safety reason, preferably, the intermediate pressure convey pipe 102 is provided with two intermediate pressure cut-off valves 11 in series. Further, the intermediate pressure convey pipe 102 is provided with a first regulating valve 12 in front of the intermediate pressure cut-off valve 11, for accuracy controlling a flow of the warming steam introduced into the intermediate pressure cylinder IP.

In addition, the combined cycle steam turbine quick start warming system according to the second embodiment further comprises a condenser 14. A high pressure bypass 500 is provided between the high pressure steam pipeline 200 and the high exhaust steam pipe 300, wherein the high pressure bypass 500 is provided with a high pressure bypass valve 13. The intermediate pressure steam-in pipe 400 is provided with an intermediate pressure bypass 600 in communication with the condenser 14, wherein the intermediate pressure bypass 600 is provided with an intermediate pressure bypass valve 15. The high exhaust steam pipe 300 is provided with an air canal 700 in communication with the condenser 14 in front of the high exhaust one-way valve 10. The air canal 700 is provided with a vent valve 16.

In the second embodiment, the warming steam in the warming steam conveying pipeline 100 is introduced into the high pressure cylinder HP by the high pressure convey pipe 101, introduced into the air canal 700 via the high pressure cylinder HP, introduced into the condenser 14 via the vent valve 16, thus forming a high pressure warming loop. The warming steam in the warming steam conveying pipeline 100 is introduced into the intermediate pressure cylinder IP via the intermediate pressure convey pipe 102, discharged in the condenser 14 via the intermediate pressure cylinder IP and the low pressure cylinder LP, thus forming an intermediate pressure warming loop.

When the steam from an adjacent unit is used as the warming steam, condensation water generated in the condenser 14 is returned into a hot well of the adjacent unit.

The combined cycle steam turbine quick start warming system according to the second embodiment can implement the combined-cycle steam turbine quick start warming method as mentioned in the first embodiment in specific steps as:
(1) The gas turbine 1 is driven by its turned device to keep a turning rotational speed of 120 rpm, and the steam turbine is driven by its turned device to keep a rotational speed of 60 rpm. The delivery valve 4, the high pressure cut-off valve 7, the first regulating valve 12, the intermediate pressure cut-off valve 11, the electric isolation valve 6, the high pressure bypass valve 13, the intermediate pressure bypass valve 15, the high exhaust one-way valve 10, the high pressure main steam valve 51, the high pressure regulating valve 52, the intermediate pressure main steam valve 91 and the intermediate pressure regulating valve 92 are all closed, the vent valve 16 is opened, the unit gland seal system is supplied with steam to establish a vacuum.
(2) The delivery valve 4 and the high pressure cut-off valve 7 are opened to start the stage of warming up pipe and valve, and to warm up the high pressure steam-in valve group. Preferably, the high pressure main steam valve 51 may be opened in break on by click way to speed up warming up valves. At this point, preferably, the first regulating valve 12 and the intermediate pressure cut-off valve 11 may be opened in break on by click way to warm up the intermediate pressure steam-in valve. Since the intermediate pressure regulating valve 92 cannot be closed tightly, the rotational speed of the steam turbine may be increased by the leakage steam, thus the rotational speed of the steam turbine is needed to control to not exceed the turning rotational speed of the gas turbine 1.
(3) By increasing the rotational speed of the gas turbine 1 to m rpm by the inverter starting device 18, the rotational speed of the gas turbine 1 is kept at m rpm. The m satisfies: 700 ≤ m ≤ 1200. Preferably, m = 1000.
(4) The high pressure main steam valve 51 and the high pressure regulating valve 52 are opened, the high pressure regulating valve 52 is used to regulate a flow of the steam for the high pressure cylinder HP, the rotational speed of the steam turbine is increased to n rpm, and the rotational speed of the steam turbine is kept stably in n rpm, where n < m. The n satisfies: 500 ≤ n ≤ 1000. Preferably, n = 800. Then the rotational speed of the gas turbine 1 is decreased, the synchro-self-shifting clutch 2 will be engaged automatically when the rotational speed of the gas turbine 1 is decreased to n rpm, and the rotational speed of the steam turbine has a trend to exceed the rotational speed of the gas turbine 1. The first regulating valve 12, the intermediate pressure cut-off valve 11 and the intermediate pressure regulating valve 92 may be opened before the synchro-self-shifting clutch 2 is automatically engaged, or may be opened after the synchro-self-shifting clutch 2 is automatically engaged. The first regulating valve 12 and the intermediate pressure regulating valve 92 are used to regulate a steam flow of the intermediate pressure cylinder IP.
(5) The inverter starting device is out of operation, the gas turbine 1 and the generator 17 are driven by the steam turbine, the warming up is started. A steam ratio in the high pressure cylinder HP and the intermediate pressure cylinder IP may be regulated by the high pressure regulating valve 52, the first regulating valve 12 and the intermediate pressure regulating valve 92, the rotational speed of the gas turbine 1 is driven by the steam turbine to run to a rotational speed p rpm to be reduced to and kept at a rotational speed less than n rpm, p satisfies: 300 ≤ p ≤ 1000. Preferably, p = 500, or p = 800. Further, the pressure of the condenser 14 is controlled at 10KPa-30KPa.
(6) The high pressure main steam valve 51, the high pressure regulating valve 52, the high pressure cut-off valve 7, the intermediate pressure cut-off valve 11 and the delivery valve 4 are closed when the temperature of the intermediate pressure rotor of the steam turbine reaches the preset temperature or the warming time reaches the preset time, the warming steam is cut, the warming up is finished, the gas turbine 1 and the steam turbine are returned back in a turning state, the rotational speeds of the gas turbine 1 and the steam turbine are decreased to the initial turning rotational speed, the synchro-self-shifting clutch will be de-meshed automatically when the rotational speed of the steam turbine is less than the rotational speed of the gas turbine 1.

After the warming up is over, each of the rotational speeds of the gas turbine and the steam turbine is returned to the turning rotational speed, the combined cycle unit can be started normally in a conventional warm or hot state.

### Third embodiment

As shown in Fig. 2, the third embodiment of the present invention is a second embodiment of the combined cycle steam turbine quick start warming system. The third embodiment is substantially the same as the second embodiment, and thus the similarities will not be repeated. The difference is that in the third embodiment, the intermediate pressure steam-in pipe 400 is further provided with a gate valve 19 upstream of the intermediate pressure steam-in valve group, the warming steam conveying pipeline 100 is in communication with the intermediate pressure steam-in pipe 400 by an intermediate pressure convey pipe 102 between the gate valve 19 and the intermediate pressure steam-in valve group. When the gate valve 19 is closed and the intermediate pressure steam-in valve group is opened, the warming steam in the warming steam conveying pipeline 100 may be introduced into the intermediate pressure steam-in pipe 400 via the intermediate pressure convey pipe 102, may be introduced from the steam inlet of the intermediate pressure cylinder IP via the intermediate pressure steam-in valve group in positive steam-in way, and may be discharged into the condenser 14 via the intermediate pressure cylinder IP and the low pressure cylinder LP, to form an intermediate pressure warming loop. The closed gate valve 19 may prevent the warming steam in the intermediate pressure steam-in pipe 400 from flowing into the reheater 8 side.

The combined cycle steam turbine quick start warming system according to the third embodiment can realize the combined-cycle steam turbine quick start warming method according to the first embodiment with steps as:
(1) The gas turbine 1 is driven by its turned device to keep a turning rotational speed of 120 rpm, and the steam turbine is driven by its turned device to keep a rotational speed of 60 rpm. The delivery valve 4, the high pressure cut-off valve 7, the first regulating valve 12, the intermediate pressure cut-off valve 11, the electric isolation valve 6, the gate valve 19, the high pressure bypass valve 13, the intermediate pressure bypass valve 15, the high exhaust one-way valve 10, the high pressure main steam valve 51, the high pressure regulating valve 52, the intermediate pressure main steam valve 91 and the intermediate pressure regulating valve 92 are all closed, the vent valve 16 is opened, the unit gland seal system is supplied with steam to establish a vacuum.
(2) The delivery valve 4, the high pressure cut-off valve 7, the first regulating valve 12 and the intermediate pressure cut-off valve 11 are opened to start warming up pipe and valve stage, and to warm up the high pressure steam-in valve group and the intermediate pressure steam-in valve. At this point, preferably, the high pressure main steam valve 51 and the intermediate pressure main steam valve 91 may be opened in break on by click way to speed up the warm-up of valves.
(3) By increasing the rotational speed of the gas turbine 1 to m rpm by the inverter starting device 18, the rotational speed of the gas turbine 1 is kept at m rpm. The m satisfies: 700 ≤ m ≤ 1200. Preferably, m=1000.
(4) The high pressure main steam valve 51 and the high pressure regulating valve 52 are opened, the high pressure regulating valve 52 is used to regulate a flow of the steam for the high pressure cylinder HP, the rotational speed of the steam turbine is increased to n rpm, and the rotational speed of the steam turbine is kept stably in n rpm, where n<m. The n satisfies: 500 ≤ n ≤ 1000. Preferably, n=800. Then the rotational speed of the gas turbine 1 is decreased, the synchro-self-shifting clutch 2 will be engaged automatically when the rotational speed of the gas turbine 1 is decreased to n rpm, and the rotational speed of the steam turbine has a trend to exceed the rotational speed of the gas turbine 1. The intermediate pressure main steam valve 91 and the intermediate pressure regulating valve 92 may be opened before the synchro-self-shifting clutch 2 is engaged automatically, or may be opened after the synchro-self-shifting clutch 2 is meshed automatically. The first regulating valve 12 and the intermediate pressure regulating valve 92 are used to regulate a flow of the intermediate pressure cylinder IP.
(5) The inverter starting device is out of operation, the gas turbine 1 and the generator 17 are driven by the steam turbine, the warming up is started. A steam ratio in the high pressure cylinder HP and the intermediate pressure cylinder IP may be regulated by the high pressure regulating valve 52, the first regulating valve 12 and the intermediate pressure regulating valve 92, the rotational speed of the gas turbine 1 is driven by the steam turbine to run to a rotational speed p rpm to be reduced to and kept at a rotational speed less than n rpm, p satisfies: 300 ≤ p ≤ 1000. Preferably, p=500, or p=800. Further, the pressure of the condenser 14 is controlled at 10KPa - 30KPa.
(6) The high pressure main steam valve 51, the high pressure regulating valve 52, the high pressure cut-off valve 7, the intermediate pressure main steam valve 91, the intermediate pressure regulating valve 92, the intermediate pressure cut-off valve 11 and the delivery valve 4 are closed when the temperature of the intermediate pressure rotor of the steam turbine reaches the preset temperature or the warming time reaches the preset time, the warming steam is cut, the warming up is finished, the gas turbine 1 and the steam turbine are returned back in a turning state, the rotational speeds of the gas turbine 1 and the steam turbine are decreased to the initial turning rotational speed, the synchro-self-shifting clutch will be de-meshed automatically when the rotational speed of the steam turbine is less than the rotational speed of the gas turbine 1.

After the warming up is over, each of the rotational speeds of the gas turbine and the steam turbine is returned to the turning rotational speed, the combined cycle unit can be started normally in a conventional warm or hot state.

### Fourth embodiment

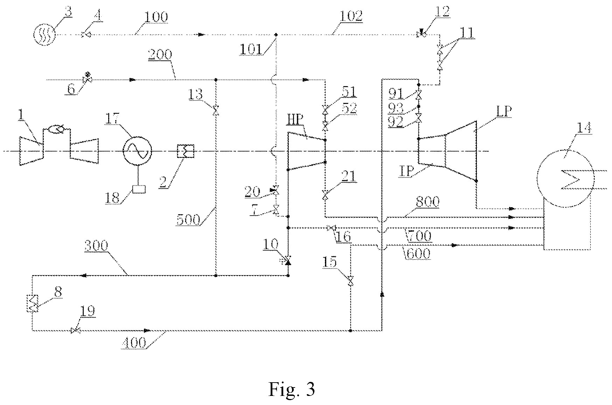

As shown in Fig. 3, the fourth embodiment of the present invention is a third embodiment of the combined cycle steam turbine quick start warming system. The fourth embodiment and the third embodiment are substantially the same, and thus the similarities will not be repeated. The difference is that in the fourth embodiment, the warming steam in communication to the high pressure cylinder HP is introduced from the steam outlet of the high pressure cylinder HP in negative steam-in way.

Specifically, in the fourth embodiment, warming steam conveying pipeline 100 is in communication with the high exhaust steam pipe 300 by a high pressure convey pipe 101 between the high exhaust one-way valve 10 and the steam outlet of the high pressure cylinder HP. The high pressure convey pipe 101 is provided with a high pressure cut-off valve 7, for controlling the ON and OFF of the high pressure convey pipe 101. Preferably, the high pressure cut-off valve 7 may connected in series. The high pressure convey pipe 101 is further provided with a second regulating valve 20 in front of the high pressure cut-off valve 7, for accurately controlling a flow of the warming steam introduced into the high pressure cylinder HP.

In addition, in the fourth embodiment, a hydrophobic mouth of the high pressure cylinder HP at the steam inlet is in communication with the condenser 14 by a hydrophobic pipeline 800, the hydrophobic pipeline 800 is provided with a trap valve 21. The warming steam in the warming steam conveying pipeline 100 is introduced into the high pressure cylinder HP via a high pressure convey pipe 101, then introduced into the hydrophobic pipeline 800 via the high pressure cylinder HP in reverse direction way, and then introduced into the condenser 14 via the trap valve 21, thus forming a high pressure warming loop.

In the fourth embodiment, intermediate pressure convey pipe 102 is in communication with the intermediate pressure steam-in pipe 400 between the gate valve 19 and the intermediate pressure steam-in valve group, of course, the intermediate pressure convey pipe 102 may also be in communication with the intermediate pressure steam-in pipe 400 at the quick cold interface 93.

The combined cycle steam turbine quick start warming system according to the fourth embodiment can implement the combined-cycle steam turbine quick start warming method according to the first embodiment with steps as:
(1) The gas turbine 1 is driven by its turned device to keep a turning rotational speed of 120 rpm, and the steam turbine is driven by its turned device to keep a rotational speed of 60 rpm. The delivery valve 4, the high pressure cut-off valve 7, the first regulating valve 12, the second regulating valve 20, the intermediate pressure cut-off valve 11, the electric isolation valve 6, the gate valve 19, the high pressure bypass valve 13, the intermediate pressure bypass valve 15, the trap valve 21, the high exhaust one-way valve 10, the high pressure main steam valve 51, the high pressure regulating valve 52, the intermediate pressure main steam valve 91 and the intermediate pressure regulating valve 92 are closed at all, the vent valve 16 is opened, the unit gland seal system is supplied with steam to establish a vacuum.
(2) The delivery valve 4, the first regulating valve 12 and the intermediate pressure cut-off valve 11 are opened to start warming up pipe and valve stage, and to warm up the intermediate pressure steam-in valve group. At this point, preferably, the intermediate pressure main steam valve 91 may be opened in break on by click way to speed up the warm-up of valves.
(3) By increasing the rotational speed of the gas turbine 1 to m rpm by the inverter starting device 18, the rotational speed of the gas turbine 1 is kept at m rpm. The m satisfies: 700 ≤ m ≤ 1200. Preferably, m=1000.
(4) The vent valve 16 is closed, the high pressure cut-off valve 7, the second regulating valve 20 and the trap valve 21 are opened, the second regulating valve 20 is used to regulate a flow of the steam for the high pressure cylinder HP, the rotational speed of the steam turbine is increased to n rpm, and the rotational speed of the steam turbine is kept stably at n rpm, where n<m. The n satisfies: 500 ≤ n ≤ 1000. Preferably, n=800. Then the rotational speed of the gas turbine 1 is decreased, the synchro-self-shifting clutch 2 will be meshed automatically when the rotational speed of the gas turbine 1 is decreased to n rpm, and the rotational speed of the steam turbine has a trend to more than the rotational speed of the gas turbine 1. The intermediate pressure main steam valve 91 and the intermediate pressure regulating valve 92 may be opened before the synchro-self-shifting clutch 2 is meshed automatically, or may be opened after the synchro-self-shifting clutch 2 is meshed automatically. The first regulating valve 12 and the intermediate pressure regulating valve 92 is used to regulate a steam flow of the intermediate pressure cylinder IP.
(5) The inverter starting device is out of operation, the gas turbine 1 and the generator 17 are driven by the steam turbine, the warming up is started. A steam ratio in the high pressure cylinder HP and the intermediate pressure cylinder IP may be regulated by the second regulating valve 20, the first regulating valve 12 and the intermediate pressure regulating valve 92, the rotational speed of the gas turbine 1 is driven by the steam turbine to run to a rotational speed p rpm to be reduced to and kept at a rotational speed less than n rpm, wherein p satisfies: 300 ≤ p ≤ 1000. Preferably, p=500, or p=800. Further, the pressure of the condenser 14 is controlled at 10KPa - 30KPa.
(6) The high pressure cut-off valve 7, the intermediate pressure main steam valve 91, the intermediate pressure regulating valve 92, the intermediate pressure cut-off valve 11 and the delivery valve 4 are closed when the temperature of the intermediate pressure rotor of the steam turbine reaches the preset temperature or the warming time reaches the preset time, the warming steam is cut, the warming up is finished, the gas turbine 1 and the steam turbine are returned back in a turning state, the rotational speeds of the gas turbine 1 and the steam turbine are decreased to the initial turning rotational speed, the synchro-self-shifting clutch will be de-meshed automatically when the rotational speed of the steam turbine is less than the rotational speed of the gas turbine 1.

After the warming up is over, each of the rotational speeds of the gas turbine and the steam turbine is returned to the turning rotational speed, the combined cycle unit can be started normally in a conventional warm or hot state.

In summary, the combined cycle steam turbine quick start warming system according to the present invention may pre-warm the steam turbine by using the warming steam supplied by the warming steam source 3 at first before starting up the gas turbine 1 to increase the initial temperature of the steam turbine, can make the steam turbine run with load earlier, while increases peak shaving capacity and power generation, can greatly shorten the time required for the combined cycle unit cold start, can save energy and start-up cost, and can improve the flexibility of unit cold start-up. Further, by increasing the rotational speed of the gas turbine to m rpm which is more than the synchronize target rotational speed n rpm, then increasing the rotational speed of the steam turbine to the synchronize target rotational speed n rpm, and then decreasing the rotational speed of the gas turbine, the synchronous-self-shifting clutch will be meshed automatically when the rotational speed of the gas turbine is decreased to n rpm, and the rotational speed of the steam turbine has a trend to exceed the rotational speed of the gas turbine, to realize the gas turbine and the steam turbine to be synchronized, by means of this speed-down meshing synchronization, the risk of the synchronous-self-shifting clutch damage caused by high-speed turning brake can be effectively eliminated.

### Fifth embodiment

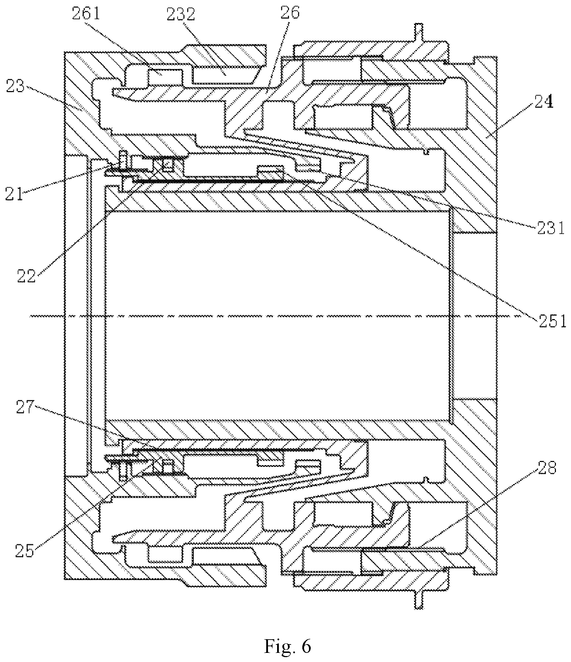

As shown in Fig. 4 and Fig. 6, the fifth embodiment of the present invention provides an embodiment of a combined cycle steam turbine quick start pre-warm system according to the present invention.

As shown in Fig. 4, the combined cycle steam turbine quick start pre-warm system according to the fifth embodiment comprises a warming steam source 3, and a gas turbine 1, a generator 17, a synchronous-self-shifting clutch 2 and a steam turbine in coaxial arrangement and sequence connection. That is, a shaft of the generator 17 is connected with a rotor shaft of the gas turbine 1 at one end thereof, and the shaft of the generator 17 is connected with a rotor shaft of the steam turbine at the other end thereof by the synchronous-self-shifting clutch 2. Preferably, the gas turbine 1 and the steam turbine share the same turned device 18, and the turned device 18 is connected with the steam turbine. The turned device 18 according to the fifth embodiment has a capacity to be able to drag at the same time the steam turbine, generator 17 and the gas turbine 1 to rotate. The steam turbine comprises a high pressure cylinder HP, an intermediate pressure cylinder IP and a low pressure cylinder LP. The steam turbine can use a structure of the high pressure cylinder HP as a separate cylinder and the intermediate pressure cylinder IP and the low pressure cylinder LP as a combined cylinder, and can also use a structure of the high pressure cylinder HP and the intermediate pressure cylinder IP as a combined cylinder and the low pressure cylinder LP as a separate cylinder. The warming steam source 3 is connected with a warming steam conveying pipeline 100 which is in communication with the high pressure cylinder HP and the intermediate pressure cylinder IP, to introduce warming steam into the high pressure cylinder HP and the intermediate pressure cylinder IP. The warming steam conveying pipeline 100 is provided with a delivery valve 4, for controlling the ON and OFF of the warming steam conveying pipeline 100. The warming steam supplied by the warming steam source 3 may be high exhaust steam from an adjacent unit, or may also be low pressure supplement steam from an adjacent unit, or may also be heat supply steam from an adjacent unit, or may also be start-up boiler steam.

The synchronous-self-shifting clutch 2 is a clutch provided with a primary pawl and a secondary pawl. As shown in Fig. 6, the clutch with double pawls used in the fifth embodiment is provided with a primary pawl 21 and a secondary pawl 22. Specifically, the clutch comprises an input end 24, an output end 23, a main sliding part 26 and a secondary sliding part 25, the input end 24 is connected with a rotor shaft of the steam turbine, and the output end 23 is connected with a shaft of the generator 17. The input end 24 is coupled with the main sliding part 26 by a main spiral spline 28, and the main sliding part 26 is coupled with the secondary sliding part 25 by a secondary spiral spline 27.

The primary pawl 21 is provided on the output end 23, the secondary sliding part 25 is provided with primary ratchet coupled with the primary pawl 21. In a low rotational speed state, the primary pawl 21 is activated and pop up by a spring force, and is fastened with the primary ratchet on the secondary sliding part 25, to implement a synchronize rotational speed of the output end 23 and the output end 24, the principle of synchronization is: in a stationary state of the gas turbine 1 and the generator 17, when the steam turbine produces a rotational speed, and the input end 24 of the clutch is driven to rotate , the main sliding part 26 is driven by the input end 24 to rotate together, and the secondary sliding part 25 is driven by the main sliding part 26 to rotate together. Since at this point, the primary pawl 21 is in a activating and pop up state, the primary pawl 21 is fastened with the primary ratchet on the secondary sliding part 25, a relative speed is generated between the secondary sliding part 25 and the main sliding part 26, so that the secondary sliding part 25 travels to the input end 24 along to the secondary spiral spline 27, then relay driving teeth 251 on the secondary sliding part 25 is meshed with relay driven teeth 231 on the output end 23, at this point, a relative rotational speed is generated between the main sliding part 26 and the input end 24, so that the main sliding part 26 travels to the input end 24 along the main spiral spline 28, then the driving teeth 261 on the main sliding part 26 is meshed with the driven teeth 232 on the output end 23, so that the output end 23 and the input end 24 are synchronized, and the gas turbine 1 is driven synchronously. When output end 23 exceeds a certain speed, such as 500 rpm, the primary pawl 21 will leave the primary ratchet, and will recover back away from work. An actual recovery speed of the primary pawl 21 can be obtained from test.

The secondary pawl 22 is provided on the secondary sliding part 25, the output end 23 is provided with a secondary ratchet coupled with the secondary pawl 22, when the input end 24 has a rotational speed greater than a certain speed, such as 700 rpm, the secondary pawl 22 is popped up. The secondary pawl 22 may have an actual pop up rotational speed to be obtained from test. If at this point, the rotational speed of the input end 24 is more than the rotational speed of the output end 23, the secondary pawl 22 will be fasten with the secondary ratchet of the output end 23, to implement the output end 23 and the output end 24 to have a synchronized rotational speed, its synchronization principle is the same with that by which the output end 23 and the output end 24 is realized to have a synchronized rotational speed by the primary pawl 21.

Therefore, a clutch with two pawls is used in the fifth embodiment, in a low rotational speed (the input end 24 has a rotational speed less than 500 rpm), as long as the rotational speed of the input end 24 exceeds the rotational speed of the output end 23, the automatic meshing can be achieved, that is, in a low rotational speed, as long as the rotational speed of the steam turbine exceeds the rotational speed of the gas turbine 1, the automatic meshing can be achieved.

Preferably, in the embodiment, each of the synchronous-self-shifting clutches 2 is provided with four of the primary pawl 21 and the secondary pawl 22.

The combined cycle steam turbine quick start pre-warm system according to the fifth embodiment may pre-warm the steam turbine by using the warming steam supplied by the warming steam source 3 at first before starting up the gas turbine 1 to increase the initial temperature of the steam turbine, can make steam turbine run with load earlier, while increases peak shaving capacity and power generation, can greatly shorten the time required for the combined cycle unit cold start, can save energy and start-up cost, and can improve the flexibility of unit cold start-up. Further, the clutch provided with the primary pawl 21 and the secondary pawl 22 is used in the synchronous-self-shifting clutch according to the fifth embodiment, in the state that the combined cycle unit is at stationary or at low rotational speed, as long as the rotational speed of the steam turbine exceeds the rotational speed of the gas turbine 1, the synchronous-self-shifting clutch is meshed automatically, to realize synchronization at low speed of the gas turbine 1 and the steam turbine, thus the risk of the synchronous-self-shifting clutch damage caused by high-speed turning brake can be totally eliminated.

Further, a steam inlet of the high pressure cylinder HP is in communication with a high pressure steam pipeline 200, the high pressure steam pipeline 200 is used to introduce the high pressure steam into the high pressure cylinder HP. The high pressure steam pipeline 200 is provided with an electric isolation valve 6 and a high pressure steam-in valve group in sequence from upstream to downstream. The high pressure steam-in valve group is adjacent to the steam inlet of the high pressure cylinder HP, for regulating a flow of the high pressure steam introduced into the high pressure cylinder HP. Preferably, the high pressure steam-in valve group comprises a high pressure main steam valve 51 and a high pressure regulating valve 52, the high pressure main steam valve 51 and the high pressure regulating valve 52 are in series. The electric isolation valve 6 is proximity to the boiler side providing high pressure main steam, for controlling the ON and OFF of the high pressure steam pipeline 200. In the fifth embodiment, the warming steam conveying pipeline 100 is in communication with the high pressure steam pipeline 200 by the high pressure convey pipe 101 between the electric isolation valve 6 and the high pressure steam-in valve group. When the electric isolation valve 6 is closed and the high pressure steam-in valve group is opened, the warming steam in the warming steam conveying pipeline 100 may be introduced into the high pressure steam pipeline 200 via a high pressure convey pipe 101, and may be introduced into the high pressure cylinder HP from a steam inlet of the high pressure cylinder HP via the high pressure steam-in valve group in a positive direction steam-in way, and the closed electric isolation valve 6 can prevent the warming steam introduced into the high pressure steam pipeline 200 from flowing to the boiler side. Of course, in the present invention, the warming steam introduced into the high pressure cylinder HP may also be introduced from the steam outlet of the high pressure cylinder HP in a negative direction steam-in way.

Preferably, the high pressure convey pipe 101 is provided with a high pressure cut-off valve 7, for controlling the ON and OFF of the high pressure convey pipe 101. Since the high pressure cut-off valve 7 is come to contact the high temperature steam directly, for safety reason, preferably, the high pressure convey pipe 101 is provided with two high pressure cut-off valves 7 in series.

The combined cycle steam turbine quick start pre-warm system according to the fifth embodiment further comprises a reheater 8, the steam outlet of the high pressure cylinder HP is in communication with an inlet of the reheater 8 by a high exhaust steam pipe 300, an outlet of the reheater 8 is in communication with the steam inlet of the intermediate pressure cylinder IP by an intermediate pressure steam-in pipe 400. The high exhaust steam discharged from the steam outlet of the high pressure cylinder HP is introduced into the reheater 8 via the high exhaust steam pipe 300 to be reheated, a hot reheated steam produced in the reheater 8 is introduced into the intermediate pressure cylinder IP via the intermediate pressure steam-in pipe 400. The high exhaust steam pipe 300 is provided with a high exhaust one-way valve 10, for preventing the high exhaust steam from back flowing into the high pressure cylinder HP.

The intermediate pressure steam-in pipe 400 is provided with an intermediate pressure steam-in valve group, the intermediate pressure steam-in valve group is near a steam inlet of the intermediate pressure cylinder IP, for regulating a flow of the hot reheated steam introduced into the intermediate pressure cylinder IP. Preferably, the intermediate pressure steam-in valve group comprises an intermediate pressure main steam valve 91 and an intermediate pressure regulating valve 92, the intermediate pressure main steam valve 91 and the intermediate pressure regulating valve 92 are in series, a valve casing of the intermediate pressure steam-in valve group is provided with a quick cold interface 93 between the intermediate pressure main steam valve 91 and the intermediate pressure regulating valve 92.

In the fifth embodiment, the warming steam conveying pipeline 100 is in communication with the intermediate pressure steam-in pipe 400 by an intermediate pressure convey pipe 102 at the quick cold interface 93. When the intermediate pressure main steam valve 91 is closed and the intermediate pressure regulating valve 92 is opened, the warming steam in the warming steam conveying pipeline 100 may be introduced into the quick cold interface 93 via the intermediate pressure convey pipe 102, and may be introduced from the steam inlet of the intermediate pressure cylinder IP by the intermediate pressure regulating valve 92 in positive direction steam-in way, the closed intermediate pressure main steam valve 91 may prevent the warming steam from flowing into the reheater 8 side via the intermediate pressure main steam valve 91.

Preferably, the intermediate pressure convey pipe 102 is provided with an intermediate pressure cut-off valve 11, for controlling the ON and OFF of the intermediate pressure convey pipe 102. Since the intermediate pressure cut-off valve 11 is come to contact the high temperature steam directly, for safety reason, preferably, the intermediate pressure convey pipe 102 is provided with two intermediate pressure cut-off valves 11 in series. Further, the intermediate pressure convey pipe 102 is provided with a regulating valve 12 in front of the intermediate pressure cut-off valve 11, for accuracy controlling a flow of the warming steam introduced into the intermediate pressure cylinder IP.

In addition, the combined cycle steam turbine quick start pre-warm system according to the fifth embodiment further comprises a condenser 14. A high pressure bypass 500 is connected between the high pressure steam pipeline 200 and the high exhaust steam pipe 300, the high pressure bypass 500 is provided with a high pressure bypass valve 13. The intermediate pressure steam-in pipe 400 is provided with an intermediate pressure bypass 600 in communication with the condenser 14, the intermediate pressure bypass 600 is provided with an intermediate pressure bypass valve 15. The high exhaust steam pipe 300 is provided with an air canal 700 in communication with the condenser 14 in front of the high exhaust one-way valve 10, the air canal 700 is provided with a vent valve 16.

In the fifth embodiment, the warming steam in the warming steam conveying pipeline 100 is introduced into the high pressure cylinder HP by a high pressure convey pipe 101, then is introduced into the air canal 700 via the high pressure cylinder HP, then is introduced into the condenser 14 via the vent valve 16, thus forming a high pressure warming up loop. The warming steam in the warming steam conveying pipeline 100 is introduced into the intermediate pressure cylinder IP via the intermediate pressure convey pipe 102, and is introduced into the condenser 14 via the intermediate pressure cylinder IP and the low pressure cylinder LP, thus forming an intermediate warming up loop.

When steam from an adjacent unit is used for the warming steam, condensation water from the condenser 14 is returned in a hot well of the adjacent unit.

The combined cycle steam turbine quick start pre-warm system according to the fifth embodiment realizes a warming up method with steps as:
(1) The gas turbine 1 is at stationary or at a low rotational speed less than a rotational speed of the steam turbine.
(2) The rotational speed of the steam turbine is increased by a turned device 18, when the rotational speed of the steam turbine has a trend to exceed the rotational speed of the gas turbine 1, and the synchronous-self-shifting clutch 2 with two pawls is meshed. The steam turbine, the generator 17 and the gas turbine 1 are driven by the turned device 18 to rotate together.
(3) The delivery valve 4, the high pressure cut-off valve 7, the regulating valve 12, the intermediate pressure cut-off valve 11, the electric isolation valve 6, the high pressure bypass valve 13, the intermediate pressure bypass valve 15, the high exhaust one-way valve 10, the high pressure main steam valve 51, the high pressure regulating valve 52, the intermediate pressure main steam valve 91 and the intermediate pressure regulating valve 92 are closed at all, the vent valve 16 is opened, the steam is supplied to the unit gland seal system to establish vacuum.
(4) The delivery valve 4 and the high pressure cut-off valve 7 are opened to start warming up pipe and valve stage, and to warm up the high pressure steam-in valve group. Preferably, the high pressure main steam valve 51 may be opened in break on by click way to speed up warming up valves. At this point, preferably, the first regulating valve 12 and the intermediate pressure cut-off valve 11 may be opened in break on by click way to warm up the intermediate pressure steam-in valve.
(5) The high pressure main steam valve 51, the high pressure regulating valve 52, the regulating valve 12, the intermediate pressure cut-off valve 11 and the intermediate pressure regulating valve 92 are opened, a steam ratio and a steam intake in the high pressure cylinder HP and the intermediate pressure cylinder IP may be regulated by the high pressure regulating valve 52, the regulating valve 12 and the intermediate pressure regulating valve 92, the rotational speed of the gas turbine is increased to and kept at p rpm, the gas turbine 1 and the generator 17 are driven by the steam turbine to rotate together at a rotational speed of p rpm. The p satisfies : 500≤p ≤2000, preferably, p=800.
(6) The turned device18 is out of operation, and start warming up. Further, after starting the warming up, to improve warming efficiency, can increase the pressure of condenser14 in the steam turbine unit, i.e., increase the back pressure of the steam turbine, the higher the back pressure, the bigger the steam intake of the steam turbine at the same rotational speed, the shorter the warming time. Preferably, the pressure of the condenser 14 is controlled at 10KPa - 30KPa.
(7) The high pressure main steam valve 51, the high pressure regulating valve 52, the high pressure cut-off valve 7, the intermediate pressure cut-off valve 11 and the delivery valve 4 are closed when the temperature of the intermediate pressure rotor of the steam turbine reaches the preset temperature or the warming time reaches the preset time, the warming steam is cut, the warming up is finished, the gas turbine 1 and the steam turbine are returned back in a turning state. When determining whether the warming up should be finished depending on whether the temperature of the intermediate pressure rotor of the steam turbine reaches the preset temperature, the preset temperature shall not be lower than 150°C, preferably, the preset temperature shall be determined according to the actual working conditions in the field, for example, the warming steam may be cut off when the temperature of the intermediate pressure rotor of the steam turbine rises to 150°C or 200°C or 300°C, to end the warming up. Of course, it is also possible to determine whether the actual warming time is up to the preset time, and the preset time is selected according to the actual working conditions in the field.

After the warming up is over, each of the rotational speeds of the gas turbine and the steam turbine is returned to the turning rotational speed, the combined cycle unit can be started normally in a conventional warm or hot state.

### Sixth embodiment

As shown in Fig. 5, an example of a combined cycle steam turbine quick start pre-warm system according to the present invention is provided by the sixth embodiment of the present invention. The sixth embodiment and the fifth embodiment are substantially the same, the similarities are not repeated, the difference is: in the sixth embodiment, the intermediate pressure steam-in pipe 400 is also provided with a gate valve 19 upstream of the intermediate pressure steam-in valve group, the warming steam conveying pipeline 100 is in communication with the intermediate pressure steam-in pipe 400 by the intermediate pressure convey pipe 102 between the gate valve 19 and the intermediate pressure steam-in valve group. When the gate valve 19 is closed and the intermediate pressure steam-in valve group is opened, the warming steam in the warming steam conveying pipeline 100 may be introduced into the intermediate pressure steam-in pipe 400 via the intermediate pressure convey pipe 102, and may be introduced from a steam inlet of the intermediate pressure cylinder IP via the intermediate pressure steam-in valve group in a positive direction steam-in way, then discharged into the condenser 14 via the intermediate pressure cylinder IP and the low pressure cylinder LP, thus forming an intermediate pressure warming up loop. The closed gate valve 19 may prevent the warming steam in the intermediate pressure steam-in pipe 400 from flowing into the reheater 8 side.

The combined cycle steam turbine quick start pre-warm system according to the sixth embodiment realizes a warming up method with steps as:
(1) The gas turbine 1 is at stationary or at a low rotational speed less than a rotational speed of the steam turbine.
(2) The rotational speed of the steam turbine is increased by a turned device 18, when the rotational speed of the steam turbine has a trend to more than the rotational speed of the gas turbine 1, the synchronous-self-shifting clutch 2 with two pawls is meshed. The steam turbine, the generator 17 and the gas turbine 1 are driven by the turned device 18 to run together.
(3) The delivery valve 4, the high pressure cut-off valve 7, the regulating valve 12, the intermediate pressure cut-off valve 11, the electric isolation valve 6, the gate valve 19, the high pressure bypass valve 13, the intermediate pressure bypass valve 15, the high exhaust one-way valve 10, the high pressure main steam valve 51, the high pressure regulating valve 52, the intermediate pressure main steam valve 91 and the intermediate pressure regulating valve 92 are all closed, the vent valve 16 is opened, the steam is supplied to the unit gland seal system to establish a vacuum.
(4) The delivery valve 4, the high pressure cut-off valve 7, the regulating valve 12 and the intermediate pressure cut-off valve 11 are opened to start warming up pipe and valve stage, and to warm up the high pressure steam-in valve group and the intermediate pressure steam-in valve group. At this point, preferably, the high pressure main steam valve 51 and the intermediate pressure main steam valve 91 may be opened in break on by click way to speed up the warm-up of the valves.
(5) The high pressure main steam valve 51, the high pressure regulating valve 52, the regulating valve 12, the intermediate pressure main steam valve 91 and the intermediate pressure regulating valve 92 are opened, a steam ratio in the high pressure cylinder HP and the intermediate pressure cylinder IP may be regulated by the high pressure regulating valve 52, the regulating valve 12 and the intermediate pressure regulating valve 92, the rotational speed of the gas turbine is increased to and kept at p rpm, the gas turbine 1 and the generator 17 are driven by the steam turbine to run together at a rotational speed of p rpm. The p satisfies : 500≤p≤2000, preferably, p=800.
(6) The turned device 18 is out of operation, and start warming up. Further, after starting the warming up, to improve warming efficiency, can increase the pressure of condenser14 in the steam turbine unit, i.e., increase the back pressure of the steam turbine, the higher the back pressure, the bigger the steam intake of the steam turbine at the same rotational speed and the shorter the warming time. Preferably, the pressure of the condenser 14 is controlled at 10KPa - 30KPa.
(7) The high pressure main steam valve 51, the high pressure regulating valve 52, the high pressure cut-off valve 7, the intermediate pressure main steam valve 91, the intermediate pressure regulating valve 92, the intermediate pressure cut-off valve 11 and the delivery valve 4 are closed when the temperature of the intermediate pressure rotor of the steam turbine reaches the preset temperature or the warming time reaches the preset time, the warming steam is cut, the warming up is finished, the gas turbine 1 and the steam turbine are returned back in a turning state.

After the warming up is over, each of the rotational speeds of the gas turbine and the steam turbine is returned to the turning rotational speed, the combined cycle unit can be started normally in a conventional warm or hot state.

In summary, the combined cycle steam turbine quick start pre-warm system according to the present invention may pre-warm the steam turbine by using the warming steam supplied by the warming steam source 3 at first before starting up the gas turbine 1 to increase the initial temperature of the steam turbine, can make steam turbine run with load earlier, while increases peak shaving capacity and power generation, can greatly shorten the time required for the combined cycle unit cold start, can save energy and start-up cost, and can improve the flexibility of unit cold start-up. Further, the clutch provided with a primary pawl 21 and a secondary pawl 22 is used in the synchronous-self-shifting clutch according to the present invention. In a state that the combined cycle unit is in stationary or at a slow rotational speed, the synchronous-self-shifting clutch will be meshed automatically as long as the rotational speed of the steam turbine exceeds the rotational speed of the gas turbine, to realize the gas turbine 1 and the steam turbine to be synchronized in a slow speed, thus the risk of the synchronous-self-shifting clutch damage caused by high-speed turning brake can be totally eliminated.

The present invention further provides a warming up method for a combined cycle steam turbine quick start pre-warm system, the combined cycle steam turbine quick start pre-warm system is the combined cycle steam turbine quick start pre-warm system provided by the present invention, the warming up method comprises steps as follows:
Step one, the gas turbine is at stationary or at a low rotational speed less than a rotational speed of the steam turbine. The step one is the step (1) of the warming up method for the combined cycle steam turbine quick start pre-warm system in the fifth embodiment or the sixth embodiment.
Step two, the rotational speed of the steam turbine is increased, when the rotational speed of the steam turbine has a trend to exceed the rotational speed of the gas turbine, the synchronous-self-shifting clutch with two pawls is meshed. The synchronous-self-shifting clutch with two pawls is the synchronous-self-shifting clutch 2 with a primary pawl 21 and a secondary pawl 22 according to the present invention as mentioned above, in a state that the combined cycle unit is in stationary or at a slow rotational speed, the synchronous-self-shifting clutch will be meshed automatically as long as the rotational speed of the steam turbine exceeds the rotational speed of the gas turbine, to realize the gas turbine and the steam turbine to be synchronized in a slow speed, thus the risk of the synchronous-self-shifting clutch damage caused by high-speed turning brake can be totally eliminated. Preferably, the rotational speed of the steam turbine may be increased by a turned device, and after the synchronous-self-shifting clutch with two pawls is meshed, the steam turbine, the generator and the gas turbine are driven by the turned device to run together. The step two is specifically the step (2) of the warming up method for the combined cycle steam turbine quick start pre-warm system in the fifth embodiment or the sixth embodiment.
Step three, the warming steam is introduced into the steam turbine, the rotational speed of the steam turbine is increased to and kept stably at p rpm, and the gas turbine and the generator are driven by the steam turbine to run together at a rotational speed of p rpm. The p satisfies: 500 ≤p≤2000, Preferably, p = 800.

With the combined cycle steam turbine quick start pre-warm system provided in the fifth embodiment as mentioned above, the step three is the step (3), the step (4) and the step (5) of the warming up method for the combined cycle steam turbine quick start pre-warm system in the fifth embodiment specifically as mentioned above, by opening, closing, and regulating the valves, to implement introducing the warming steam into the steam turbine, and to regulate and control a ratio and a flow of the introduced steam, so that the rotational speed of the steam turbine is increased to and kept at p rpm, and the gas turbine and the generator is driven by the steam turbine to run together at a rotational speed of p rpm.

With the combined cycle steam turbine quick start pre-warm system provided in the sixth embodiment as mentioned above, the step three is the step (3), the step (4) and the step (5) of the warming up method for the combined cycle steam turbine quick start pre-warm system in the sixth embodiment specifically as mentioned above, by opening, closing, and regulating the valves, to realize introducing the warming steam into the steam turbine, and to regulate and control a ratio and a flow of the introduced steam, so that the rotational speed of the steam turbine is increased to and kept at p rpm, and the gas turbine and the generator is driven by the steam turbine to run together at a rotational speed of p rpm.

Step four, start warming up. When the rotational speed of the steam turbine is increased by the turned device in the step two, the turned device is out of operation before the warming up is started. Further, after starting the warming up, to improve warming efficiency, can increase the pressure of condenser14 in the steam turbine unit, i.e., increase the back pressure of the steam turbine, the higher the back pressure, the bigger the steam intake of the steam turbine at the same rotational speed, the shorter the warming time. Preferably, the pressure of the condenser 14 is controlled at 10KPa - 30KPa. The step four is the step (6) of the warming up method for the combined cycle steam turbine quick start pre-warm system in the fifth embodiment or the sixth embodiment specifically mentioned above.

Step five, when the temperature of the intermediate pressure rotor of the steam turbine reaches the preset temperature or the warming time reaches the preset time, the warming steam is cut, the warming up is finished, the gas turbine and the steam turbine are returned back in a turning state.

With the combined cycle steam turbine quick start pre-warm system provided in the fifth embodiment as mentioned above, the step five is the step (7) of the warming up method for the combined cycle steam turbine quick start pre-warm system in the fifth embodiment specifically as mentioned above, the warming steam is cut off by closing corresponding valves, and warming up is finished.

With combined cycle steam turbine quick start pre-warm system provided in the sixth embodiment as mentioned above, the step five is the step (7) of the warming up method for the combined cycle steam turbine quick start pre-warm system in the sixth embodiment specifically as mentioned above, the warming steam is cut off by closing corresponding valves, and warming up is finished.

In the step five above, when determining whether warming up should be finished depending on whether the temperature of the intermediate pressure rotor of the steam turbine reaches the preset temperature, the preset temperature shall not be lower than 150°C, preferably, the preset temperature shall be determined according to the actual working conditions in the field, for example, the warming steam may be cut off at 150°C or 200°C or 300°C for the purpose of ending the warming up. Of course, it is also possible to determine whether the actual warming time is up to the preset time, and the preset time is selected according to the actual working conditions in the field.

After the warming up is over, each of the rotational speeds of the gas turbine and the steam turbine is returned to the turning rotational speed, the combined cycle unit can be started normally in a conventional warm or hot state.

The warming up method for the combined cycle steam turbine quick start pre-warm system according to the present invention may pre-warm the steam turbine by using the warming steam supplied by the warming steam source at first before starting up the gas turbine to increase the initial temperature of the steam turbine, can make steam turbine run with load earlier, while increases peak shaving capacity and power generation, can greatly shorten the time required for the combined cycle unit cold start, can save energy and start-up cost, and can improve the flexibility of unit cold start-up. Further, the clutch provided with a primary pawl and a secondary pawl is used in the synchronous-self-shifting clutch according to the present invention. In a state that the combined cycle unit is in stationary or at a slow rotational speed, the synchronous-self-shifting clutch will be meshed automatically as long as the rotational speed of the steam turbine exceeds the rotational speed of the gas turbine, to realize the gas turbine and the steam turbine to be synchronized in a slow speed, thus the risk of the synchronous-self-shifting clutch damage caused by high-speed turning brake can be totally eliminated.

### Seventh embodiment

As shown in Fig. 7, the seventh embodiment provides an example of a combined cycle unit steam turbine quick start warming system according to the present invention.

The combined cycle unit steam turbine quick start warming system according to the seventh embodiment comprises a gas turbine 1, a steam turbine 2, a generator 17 and a warming steam source 3, and the generator 17 is connected with a rotor output shaft of the steam turbine 2. The steam turbine 2 comprises a high pressure cylinder HP, an intermediate pressure cylinder IP and a low pressure cylinder LP. The steam turbine 2 may use a structure of the high pressure cylinder HP as a separate cylinder, and the intermediate pressure cylinder IP and the low pressure cylinder LP as a combined cylinder, and can also use a structure of the high pressure cylinder HP and the intermediate pressure cylinder IP as a combined cylinder and the low pressure cylinder LP as a separate cylinder. The warming steam source 3 is connected with a warming steam conveying pipeline 100 which is in communication with the high pressure cylinder HP and the intermediate pressure cylinder IP, to introduce a warming steam into the high pressure cylinder HP and the intermediate pressure cylinder IP. The warming steam conveying pipeline 100 is provided with a delivery valve 4, for controlling the ON and OFF of the warming steam conveying pipeline 100. The warming steam supplied by the warming steam source 3 may be high exhaust steam from an adjacent unit, or may also be low pressure supplement steam from an adjacent unit, or may also be heat supply steam from an adjacent unit, or may also be start-up boiler steam.

The arrangement of the gas turbine 1 and the steam turbine 2 in the present invention is not limited. The gas turbine 1 and the steam turbine 2 may use a single-axis manner, as shown in Fig. 7, and the gas turbine 1 is connected with a rotor shaft of the steam turbine 2. Of course, the gas turbine 1 and the steam turbine 2 may also use a split-axis manner.

The combined cycle unit steam turbine quick start warming system according to the seventh embodiment may pre-warm the steam turbine 2 by using the warming steam supplied by the warming steam source 3 at first before starting up the gas turbine 1 to increase the initial temperature of the steam turbine, can make steam turbine 2 run with load earlier, while increases peak shaving capacity and power generation, can greatly shorten the time required for the combined cycle unit cold start, can save energy and start-up cost, and can improve the flexibility of unit cold start-up.

Further, a steam inlet of the high pressure cylinder HP is in communication with a high pressure steam pipeline 200, the high pressure steam pipeline 200 is used to introduce a high pressure main steam into the high pressure cylinder HP. The high pressure steam pipeline 200 is provided with an electric isolation valve 6 and a high pressure steam-in valve group in sequence from upstream to downstream. The high pressure steam-in valve group is near the steam inlet of the high pressure cylinder HP, for regulating a flow of the high pressure steam introduced into the high pressure cylinder HP. Preferably, the high pressure steam-in valve group comprises a high pressure main steam valve 51 and a high pressure regulating valve 52, the high pressure main steam valve 51 and the high pressure regulating valve 52 are in series. The electric isolation valve 6 is near to the boiler side providing high pressure main steam, for controlling the ON and OFF of the high pressure steam pipeline 200. In the seventh embodiment, the warming steam conveying pipeline 100 is in communication with the high pressure steam pipeline 200 by the high pressure convey pipe 101 between the electric isolation valve 6 and the high pressure steam-in valve group. When the electric isolation valve 6 is closed and the high pressure steam-in valve group is opened, the warming steam in the warming steam conveying pipeline 100 may be introduced into the high pressure steam pipeline 200 via a high pressure convey pipe 101, and may be introduced into the high pressure cylinder HP from a steam inlet of the high pressure cylinder HP via the high pressure steam-in valve group in a positive direction steam-in way, and the closed electric isolation valve 6 can prevent the warming steam introduced into the high pressure steam pipeline 200 from flowing to the boiler side. Of course, in the present invention, the warming steam introduced into the high pressure cylinder HP may also be introduced from the steam outlet of the high pressure cylinder HP in a negative direction steam-in way.

Preferably, the high pressure convey pipe 101 is provided with a high pressure cut-off valve 7, for controlling the ON and OFF of the high pressure convey pipe 101. Since the high pressure cut-off valve 7 is come to contact the high temperature steam directly, for safety reason, preferably, the high pressure convey pipe 101 is provided with two high pressure cut-off valves 7 in series.

The combined cycle unit steam turbine quick start warming system according to the seventh embodiment further comprises a reheater 8, the steam outlet of the high pressure cylinder HP is in communication with an inlet of the reheater 8 by a high exhaust steam pipe 300, an outlet of the reheater 8 is in communication with the steam inlet of the intermediate pressure cylinder IP by an intermediate pressure steam-in pipe 400. The high exhaust steam discharged from the steam outlet of the high pressure cylinder HP is introduced into the reheater 8 via the high exhaust steam pipe 300 to be reheated, and a hot reheated steam produced in the reheater 8 is introduced into the intermediate pressure cylinder IP via the intermediate pressure steam-in pipe 400. The high exhaust steam pipe 300 is provided with a high exhaust one-way valve 10, for preventing the high exhaust steam from back flowing into the high pressure cylinder HP.

The intermediate pressure steam-in pipe 400 is provided with an intermediate pressure steam-in valve group, the intermediate pressure steam-in valve group is near a steam inlet of the intermediate pressure cylinder IP, for regulating a flow of the hot reheated steam introduced into the intermediate pressure cylinder IP. Preferably, the intermediate pressure steam-in valve group comprises an intermediate pressure main steam valve 91 and a intermediate pressure regulating valve 92, the intermediate pressure main steam valve 91 and the intermediate pressure regulating valve 92 are in series, a valve casing of the intermediate pressure steam-in valve group is provided with a quick cold interface 93 between the intermediate pressure main steam valve 91 and the intermediate pressure regulating valve 92.

In the seventh embodiment, the warming steam conveying pipeline 100 is in communication with the intermediate pressure steam-in pipe 400 by an intermediate pressure convey pipe 102 at the quick cold interface 93. When the intermediate pressure main steam valve 91 is closed and the intermediate pressure regulating valve 92 is opened, the warming steam in the warming steam conveying pipeline 100 may be introduced into the quick cold interface 93 via the intermediate pressure convey pipe 102, and may be introduced from the steam inlet of the intermediate pressure cylinder IP by the intermediate pressure regulating valve 92 in positive direction steam-in way, the closed intermediate pressure main steam valve 91 may prevent the warming steam from flowing into the reheater 8 side via the intermediate pressure main steam valve 91.

Preferably, the intermediate pressure convey pipe 102 is provided with an intermediate pressure cut-off valve 11, for controlling the ON and OFF of the intermediate pressure convey pipe 102. Since the intermediate pressure cut-off valve 11 is come to contact the high temperature steam directly, for safety reason, preferably, the intermediate pressure convey pipe 102 is provided with two intermediate pressure cut-off valves 11 in series. Further, the intermediate pressure convey pipe 102 is provided with a regulating valve 12 in front of the intermediate pressure cut-off valve 11, for accuracy controlling a flow of the warming steam introduced into the intermediate pressure cylinder IP.

In addition, the combined cycle steam turbine quick start pre-warm system according to the fifth embodiment further comprises a condenser 14. A high pressure bypass 500 is connected between the high pressure steam pipeline 200 and the high exhaust steam pipe 300, the high pressure bypass 500 is provided with a high pressure bypass valve 13. The intermediate pressure steam-in pipe 400 is provided with an intermediate pressure bypass 600 in communication with the condenser 14, the intermediate pressure bypass 600 is provided with an intermediate pressure bypass valve 15. The high exhaust steam pipe 300 is provided with an air canal 700 in communication with the condenser 14 in front of the high exhaust one-way valve 10, the air canal 700 is provided with a vent valve 16.

In the seventh embodiment, the warming steam in the warming steam conveying pipeline 100 is introduced into the high pressure cylinder HP by a high pressure convey pipe 101, then is introduced into the air canal 700 via the high pressure cylinder HP, then is introduced into the condenser 14 via the vent valve 16, thus forming a high pressure warming up loop. the warming steam in the warming steam conveying pipeline 100 is introduced into the intermediate pressure cylinder IP via the intermediate pressure convey pipe 102, and is introduced into the condenser 14 via the intermediate pressure cylinder IP and the low pressure cylinder LP, thus forming an intermediate warming up loop.

When steam from an adj acent unit is used for the warming steam, condensate from the condenser 14 is returned in a hot well of the adjacent unit.

The combined cycle steam turbine quick start pre-warm system according to the seventh embodiment realizes a warming up method with steps as:
(1) a gas turbine 1, a steam turbine 2 and a generator 17 driven by a turned device are kept a rotational speed at 60 rpm. A delivery valve 4, a high pressure cut-off valve 7, a first regulating valve 12, an intermediate pressure cut-off valve 11, an electric isolation valve 6, a high pressure bypass valve 13, an intermediate pressure bypass valve 15, a high exhaust one-way valve 10, a high pressure main steam valve 51, a high pressure regulating valve 52, an intermediate pressure main steam valve 91 and an intermediate pressure regulating valve 92 are closed at all, a vent valve 16 is opened, a unit gland seal system is supplied with steam to establish vacuum.
(2) The delivery valve 4 and the high pressure cut-off valve 7 are opened to start warming up pipe and valve stage, and to warm up the high pressure steam-in valve group. Preferably, the high pressure main steam valve 51 may be opened in break on by click way to speed up warming up valves. At this point, preferably, the first regulating valve 12 and the intermediate pressure cut-off valve 11 may be opened in break on by click way to warm the intermediate pressure steam-in valve group.
(3) The high pressure main steam valve 51, the high pressure regulating valve 52, the first regulating valve 12, the intermediate pressure cut-off valve 11 and the intermediate pressure regulating valve 92 are opened, a ratio and a flow of introduced steam of the high pressure cylinder HP and the intermediate pressure cylinder IP are regulated by using the high pressure regulating valve 52, the first regulating valve 12 and the intermediate pressure regulating valve 92, the rotational speed of the steam turbine 2 is increased to and kept at p rpm to start warming up. In the seventh embodiment, the gas turbine 1 and the generator 17 may be driven by the steam turbine 2 to run together at a rotational speed of p rpm. The p satisfies: 500≤p≤2000, preferably, p=800. Further, after starting the warming up, to improve warming efficiency, can increase the pressure of condenser14 in the steam turbine unit, i.e., increase the back pressure of the steam turbine, the higher the back pressure, the bigger the steam intake of the steam turbine 2 at the same rotational speed, the shorter the warming time. Preferably, the pressure of the condenser 14 is controlled at 10KPa - 30KPa.
(4) When the temperature of an intermediate pressure rotor of the steam turbine 2 reaches a preset temperature, or the warming time reaches a preset time, the high pressure main steam valve 51, the high pressure regulating valve 52, the high pressure cut-off valve 7, the intermediate pressure cut-off valve 11 and the delivery valve 4 are closed, the introducing warming steam is stopped, the warming up is finished and the gas turbine and the steam turbine are return to the turned state. The preset temperature shall not be less than 150°C when determining the end of the warming up based on whether the temperature of the steam turbine 2 medium-pressure rotor reaches the preset temperature, preferably, the preset temperature can be determined according to the actual working conditions, for example, the warming steam can be cut off when the temperature of the intermediate pressure rotor of the steam turbine rises to 150°C or 200°C or 300°C, to end the warming up. Of course, it is also possible to determine whether to end the warming up based on whether the actual warming time is up to the preset time, and the preset time is selected according to the actual working conditions in the field.

After the warming up is over, each of the rotational speeds of the gas turbine 1 and the steam turbine 2 is returned to the turning rotational speed, the combined cycle unit can be started normally in a conventional warm or hot state.

### Eighth embodiment

As shown in Fig. 8, the eighth embodiment provides another example of the combined cycle unit steam turbine quick start warming system according to the present invention. The eighth embodiment and the seventh embodiment are substantial same, The similarities are not repeated, and the difference is: in the eighth embodiment, the intermediate pressure steam-in pipe 400 is provided with a gate valve 19 upstream of the intermediate pressure steam-in valve group, the warming steam conveying pipeline 100 is in communication with the intermediate pressure steam-in pipe 400 by the intermediate pressure convey pipe 102 between the gate valve 19 and the intermediate pressure steam-in valve group. When the gate valve 19 is closed and the intermediate pressure steam-in valve group is opened, the warming steam in the warming steam conveying pipeline 100 may be introduced into the intermediate pressure steam-in pipe 400 via the intermediate pressure convey pipe 102, and may be introduced from a steam inlet of the intermediate pressure cylinder IP via the intermediate pressure steam-in valve group in a positive direction steam-in way, then discharged into the condenser 14 via the intermediate pressure cylinder IP and the low pressure cylinder LP, to form an intermediate warming up loop. The closed gate valve 19 may prevent the warming steam in the intermediate pressure steam-in pipe 400 from flowing into the reheater 8 side.

The combined cycle unit steam turbine quick start warming system according to the eighth embodiment realizes a warming up method with steps as:
(1)The gas turbine 1, the steam turbine 2 and the generator 17 keep at a rotational speed of 60 rpm driven by the turned device. The delivery valve 4, the high pressure cut-off valve 7, the first regulating valve 12, the intermediate pressure cut-off valve 11, the electric isolation valve 6, the gate valve 19, the high pressure bypass valve 13, the intermediate pressure bypass valve 15, the high exhaust one-way valve 10, the high pressure main steam valve 51, the high pressure regulating valve 52, the intermediate pressure main steam valve 91 and the intermediate pressure regulating valve 92 are closed at all, the vent valve 16 is opened, the unit gland seal system is supplied with a steam to establish vacuum.
(2)The delivery valve 4, the high pressure cut-off valve 7, the first regulating valve 12 and intermediate pressure cut-off valve 11 are opened to start warming up pipe and valve stage, and to warm up the high pressure steam-in valve group and the intermediate pressure steam-in valve group. At this point, preferably, the high pressure main steam valve 51 and the intermediate pressure main steam valve 91 may be opened in break on by click way to speed up warming up valves.
(3)The high pressure main steam valve 51, the high pressure regulating valve 52, the first regulating valve 12, the intermediate pressure cut-off valve 11 and the intermediate pressure regulating valve 92 are opened, a ratio and a flow of introduced steam of the high pressure cylinder HP and the intermediate pressure cylinder IP are regulated by using the high pressure regulating valve 52, the first regulating valve 12 and the intermediate pressure regulating valve 92, the rotational speed of the steam turbine 2 is increased to and kept at p rpm to start warming up. In the eighth embodiment, the gas turbine 1 and the generator 17 may be driven by the steam turbine 2 to run together at a rotational speed of p rpm. The p satisfies: 500≤p≤2000, preferably, p=800. Further, after starting the warming up, the pressure of the condenser 14 is controlled at 10KPa - 30KPa.
(4) When the temperature of an intermediate pressure rotor of the steam turbine 2 reaches a preset temperature, or the warming time reaches a preset time, the high pressure main steam valve 51, the high pressure regulating valve 52, the high pressure cut-off valve 7, the intermediate pressure main steam valve 91, the intermediate pressure regulating valve 92, the intermediate pressure cut-off valve 11 and the delivery valve 4 are closed, the warming steam is stopped, the warming up is finished and the gas turbine 1 and the steam turbine 2 are return to the turned state.

After the warming up is over, each of the rotational speeds of the gas turbine 1 and the steam turbine 2 is returned to the turning rotational speed, the combined cycle unit can be started normally in a conventional warm or hot state.

### Ninth embodiment

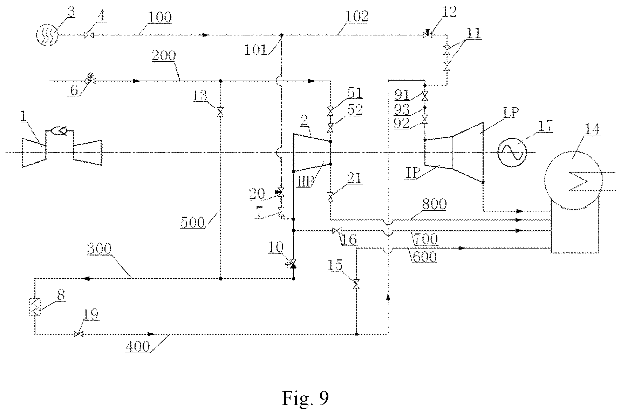

As shown in Fig. 9, the ninth embodiment provides a third embodiment of the combined cycle unit steam turbine quick start warming system according to the present invention. The ninth embodiment and the eighth embodiment are substantial same, the similarities are not repeated, and the difference is: in the ninth embodiment, the warming steam introduced into the high pressure cylinder HP is introduced from a steam outlet of the high pressure cylinder HP in a negative direction steam-in way.

Specifically, in the ninth embodiment, the warming steam conveying pipeline 100 is in communication with high exhaust steam pipe 300 by the high pressure convey pipe 101 between the high exhaust one-way valve 10 and a steam outlet of the high pressure cylinder HP. The high pressure convey pipe 101 is provided with a high pressure cut-off valve 7, for controlling the ON and OFF of the high pressure convey pipe 101. Preferably, there may be two of the high pressure cut-off valve 7 provided in series. The high pressure convey pipe 101 is further provided with a second regulating valve 20 in front of the high pressure cut-off valve 7, for accuracy controlling a flow of the warming steam introduced in the high pressure cylinder HP.

In addition, in the ninth embodiment, a hydrophobic mouth at the steam inlet of the high pressure cylinder HP is in communication with a condenser 14 by a hydrophobic pipeline 800, the hydrophobic pipeline 800 is provided with a trap valve 21. The warming steam in the warming steam conveying pipeline 100 is introduced into the high pressure cylinder HP by a high pressure convey pipeline 101, introduced into the hydrophobic pipeline 800 after flowing back in the high pressure cylinder HP, introduced into the condenser 14 via a trap valve 21, thus forming a high pressure warming up loop.

In the ninth embodiment, the intermediate pressure convey pipe 102 is in communication with an intermediate pressure steam-in pipe 400 between the gate valve 19 and the intermediate pressure steam-in valve group, of course, the intermediate pressure convey pipe 102 may be in communication with the intermediate pressure steam-in pipe 400 at the quick cold interface 93.

The combined cycle unit steam turbine quick start warming system according to the ninth embodiment realizes a warming up method with steps as:
(1)The gas turbine 1, the steam turbine 2 and the generator 17 keep a rotational speed of 60 rpm driven by the turned device. The delivery valve 4, the high pressure cut-off valve 7, the first regulating valve 12, the second regulating valve 20, the intermediate pressure cut-off valve 11, the electric isolation valve 6, the gate valve 19, the high pressure bypass valve 13, the intermediate pressure bypass valve 15, the trap valve 21, the high exhaust one-way valve 10, the high pressure main steam valve 51, the high pressure regulating valve 52, the intermediate pressure main steam valve 91 and the intermediate pressure regulating valve 92 are closed at all, the vent valve 16 is opened, the unit gland seal system is supplied with steam to establish vacuum.
(2)The delivery valve 4, the first regulating valve 12 and the intermediate pressure cut-off valve 11 are opened to start a warming up pipe and a warming up valve stage, and warm up the intermediate pressure steam-in valve group. At this point, preferably, the intermediate pressure main steam valve 91 may be opened in break on by click way to speed up warming up valves.
(3) The vent valve 16 is closed, the high pressure cut-off valve 7, the second regulating valve 20, the trap valve 21, the intermediate pressure main steam valve 91 and the intermediate pressure regulating valve 92 are opened, a ratio and a flow of introduced steam of the high pressure cylinder HP and the intermediate pressure cylinder IP are regulated by using the second regulating valve 20, the first regulating valve 12 and the intermediate pressure regulating valve 92, the rotational speed of the steam turbine 2 is increased to and kept at p rpm to start warming up. In the ninth embodiment, the gas turbine 1 and the generator 17 may be driven by the steam turbine 2 to run together at a rotational speed of p rpm. The p satisfies: 500≤p≤2000, preferably, p=800. Further, the pressure of the condenser 14 is controlled at 10KPa-30KPa.
(4) When the temperature of an intermediate pressure rotor of the steam turbine 2 reaches a preset temperature, or the warming time reaches a preset time, the high pressure cut-off valve 7, the intermediate pressure main steam valve 91, the intermediate pressure regulating valve 92, the intermediate pressure cut-off valve 11 and the delivery valve 4 are closed, the warming steam is stopped, the warming up is finished and the gas turbine1 and the steam turbine 2 are return to the turned state.

After the warming up is over, each of the rotational speeds of the gas turbine 1 and the steam turbine 2 is returned to the turning rotational speed, the combined cycle unit can be started normally in a conventional warm or hot state.

In summary, the combined cycle unit steam turbine quick start warming system according to the present invention may pre-warm the steam turbine 2 by using the warming steam supplied by the warming steam source 3 at first before starting up the gas turbine 1 to increase the initial temperature of the steam turbine 2, can make steam turbine 2 run with load earlier, while increases peak shaving capacity and power generation, can greatly shorten the time required for the combined cycle unit cold start, can save energy and start-up cost, and can improve the flexibility of unit cold start-up.

## Claims

1. A method for warming a combined-cycle steam turbine for quick starting the combined-cycle steam turbine wherein the method comprises steps:
step S1, operating a gas turbine (1) and a steam turbine (HP, IP, LP) in a turned state;
step S2, increasing a rotational speed of the gas turbine (1) to and keeping at m rpm;
step S3, introducing warming steam into the steam turbine (HP, IP, LP), increasing the rotational speed of the steam turbine (HP, IP, LP) to and keeping at n rpm, where n<m;
step S4, decreasing the rotational speed of the gas turbine (1), thus a synchro-self-shifting clutch (2) is automatically meshed when the rotational speed of the gas turbine (1) is decreased to n rpm and the rotational speed of the steam turbine (HP, IP, LP) tends to exceed the rotational speed of the gas turbine (1),
step S5, utilizing the steam turbine (HP, IP, LP) to drive the gas turbine and a generator (17) to rotate, so as to start warming up, the steam turbine drives the gas turbine and the generator to keep their rotational speed at p rpm, where p<n;
step S6, stopping the introducing warming steam and finishing the warming up when the temperature of an intermediate pressure rotor of the steam turbine reaches a preset temperature, or a warming time reaches a preset time, and then restoring the gas turbine and the steam turbine to the turned state.

2. The method according to claim 1, wherein in the step S2, m satisfies: 700 ≤ m ≤ 1200;
and/or, in the step S2, increasing the rotational speed of the gas turbine (1) to and keeping at m rpm by an inverter starting device (18) and the generator (17);
and/or, in the step S3, n satisfies: 500 ≤ n ≤ 1000;
and/or, in the step S3, the warming steam is high exhaust steam from an adjacent unit or low pressure supplement steam from an adjacent unit or heat supply steam from an adjacent unit or start boiler steam; preferably, when the steam from adjacent unit is used as the warming steam, condensation water generated in a condenser (14) of the steam turbine unit is returned to a hot well of the adjacent unit;
and/or, in the step S5, after starting warming up, increasing pressure to the condenser (14) in the steam turbine (HP, IP, LP), preferably, in the step S5, controlling the pressure of the condenser (14) at 10KPa - 30KPa;
and/or, in the step S5, p satisfies: 300 ≤ p ≤ 1000;
and/or, in the step S6, the preset temperature is not less than 150°C.

## Patentansprüche

1. Verfahren zum Erwärmen einer Kombidampfturbine zum schnellen Starten der Kombidampfturbine, wobei das Verfahren die folgenden Schritte umfasst:
Schritt S1: Betreiben einer Gasturbine und einer Dampfturbine (HP, IP, LP) in einem gedrehten Zustand;
Schritt S2: Erhöhen einer Drehzahl der Gasturbine (1) auf m U/min und Halten bei diesem Wert;
Schritt S3: Einleiten von Erwärmungsdampf in die Dampfturbine (HP, IP, LP), Erhöhen der Drehzahl der Dampfturbine (HP, IP, LP) auf n U/min und Halten bei n U/min, wobei gilt n<m;
Schritt S4: Verringern der Drehzahl der Gasturbine (1), sodass eine selbstschaltende Synchronkupplung (2) automatisch eingerückt wird, wenn die Drehzahl der Gasturbine (1) auf n U/min verringert wird und die Drehzahl der Dampfturbine (HP, IP, LP) dazu neigt, die Drehzahl der Gasturbine (1) zu überschreiten,
Schritt S5: Verwenden der Dampfturbine (HP, IP, LP) zum Antreiben der Gasturbine und eines Generators (17) zum Drehen, um mit dem Erwärmen zu beginnen, wobei die Dampfturbine die Gasturbine und den Generator dazu antreibt, ihre Drehzahl bei p U/min beizubehalten, wobei gilt p<n;
Schritt S6, Stoppen des Einleitens von Erwärmungsdampf und Beenden des Erwärmens, wenn die Temperatur eines Zwischendruckrotors der Dampfturbine eine voreingestellte Temperatur erreicht oder eine Erwärmungszeit eine voreingestellte Zeit erreicht, und dann erneutes Überführen der Gasturbine und der Dampfturbine in den gedrehten Zustand.

2. Verfahren nach Anspruch 1, wobei in Schritt S2 für m gilt: 700 ≤ m ≤ 1200;
und/oder in Schritt S2 Erhöhen der Drehzahl der Gasturbine (1) auf m U/min und Halten bei m U/min durch eine Wechselrichter-Startvorrichtung (18) und den Generator (17);
und/oder in Schritt S3 für n gilt: 500 ≤ n ≤ 1000;
und/oder in Schritt S3 der Erwärmungsdampf Hochabdampf von einer benachbarten Einheit oder Niederdruckergänzungsdampf von einer benachbarten Einheit oder Wärmezufuhrdampf von einer benachbarten Einheit oder Startkesseldampf ist; vorzugsweise wobei, wenn der Dampf aus einer benachbarten Einheit als Erwärmungsdampf verwendet wird, in einem Kondensator (14) der Dampfturbineneinheit erzeugtes Kondenswasser zu einem heißen Schacht der benachbarten Einheit zurückgeführt wird;
und/oder, in Schritt S5, nach Beginn des Erwärmens, Erhöhen des Drucks zum Kondensator (14) in der Dampfturbine (HP, IP, LP), vorzugsweise, in Schritt S5, Regeln des Drucks des Kondensators (14) auf 10-30 kPa;
und/oder in Schritt S5 für p gilt: 300 ≤ p ≤ 1000;
und/oder in Schritt S6 die voreingestellte Temperatur nicht weniger als 150 °C beträgt.

## Revendications

1. Procédé de chauffage d'une turbine à vapeur à cycle combiné pour un démarrage rapide de la turbine à vapeur à cycle combiné, le procédé comprenant les étapes suivantes :
étape S1, mise d'une turbine à gaz (1) et d'une turbine à vapeur (HP, IP, LP) dans un état de marche ;
étape S2, augmentation de la vitesse de rotation de la turbine à gaz (1), jusqu'à m tr/min et maintien de cette vitesse à m tr/min ;
étape S3, introduction de la vapeur de chauffage dans la turbine à vapeur (HP, IP, LP), augmentation de la vitesse de rotation de la turbine à vapeur (HP, IP, LP) jusqu'à n tr/min et maintien, avec n < m ;
étape S4, diminution de la vitesse de rotation de la turbine à gaz (1), un embrayage synchro-automatique (2) étant ainsi automatiquement engrené lorsque la vitesse de rotation de la turbine à gaz (1) est diminuée à n tr/min et que la vitesse de rotation de la turbine à vapeur (HP, IP, LP) tend à dépasser la vitesse de rotation de la turbine à gaz (1),
étape S5, utilisation de la turbine à vapeur (HP, IP, LP) pour entraîner la turbine à gaz et un générateur (17) à tourner, de manière à démarrer le chauffage, la turbine à vapeur entraîne la turbine à gaz et le générateur pour maintenir leur vitesse de rotation à p tr/min, avec p < n ;
étape S6, arrêt de l'introduction de vapeur de chauffage et fin du chauffage lorsque la température d'un rotor à pression intermédiaire de la turbine à vapeur atteint une température prédéfinie, ou qu'un temps de chauffage atteint un temps prédéfini, puis remise de la turbine à gaz et de la turbine à vapeur à l'état de marche.

2. Procédé selon la revendication 1, à l'étape S2, m satisfaisant : 700 ≤ m ≤ 1200 ;
et/ou, à l'étape S2, l'augmentation de la vitesse de rotation de la turbine à gaz (1) jusqu'à à m tr/min et le maintien par un dispositif de démarrage à onduleur (18) et le générateur (17) ;
et/ou, à l'étape S3, n satisfaisant : 500 ≤ n ≤ 1000 ;
et/ou, à l'étape S3, la vapeur de chauffage étant de la vapeur d'échappement haute pression provenant d'une unité adjacente ou de la vapeur de complément basse pression provenant d'une unité adjacente ou de la vapeur d'alimentation en chaleur provenant d'une unité adjacente ou de la vapeur de chaudière de démarrage ; de préférence, lorsque la vapeur provenant d'une unité adjacente est utilisée comme vapeur de chauffage, l'eau de condensation générée dans un condenseur (14) de l'unité de turbine à vapeur étant renvoyée dans un puits chaud de l'unité adjacente ;
et/ou, à l'étape S5, après le début du chauffage, augmentation de la pression dans le condenseur (14) de la turbine à vapeur (HP, IP, LP), de préférence, à l'étape S5, commande de la pression du condenseur (14) à 10 KPa - 30 KPa ;
et/ou, à l'étape S5, p satisfaisant : 300 ≤ p ≤ 1000 ;
et/ou, à l'étape S6, la température préréglée n'étant pas inférieure à 150 °C.
